# EUROPÄISCHE PATENTSCHRIFT

(11) **EP 2 770 265 B1**
(45) Veröffentlichungstag und Bekanntmachung des Hinweises auf die Patenterteilung: **09.09.2015**
(21) Anmeldenummer: 14000467.2
(22) Anmeldetag: 10.02.2014
(51) Int. Cl.: F24D 19/02, F24D 19/00, F16B 2/06

(54) **Halterung für eine Luftzirkulationseinheit**
Mounting for an air circulation unit
Support pour une unité de circulation d'air

(30) Priorität: 26.02.2013 DE 202013001811 U; 20.08.2013 DE 202013007388 U
(43) Veröffentlichungstag der Anmeldung: 27.08.2014
(73) Patentinhaber: Ulamo Holding BV, 7071 PR Ulft (NL)
(72) Erfinder: Brincke, Henk ten, 7081 GJ Gendringen (NL)
(74) Vertreter: Demski, Siegfried

(56) Entgegenhaltungen:
- EP-A2- 0 787 955
- WO-A1-2007/042894
- DE-A1- 19 908 403
- DE-U1-202007 015 686
- DE-U1-202010 011 282
- US-A- 5 725 356

## Beschreibung

Die Erfindung betrifft eine Halterung für eine Luftzirkulationseinheit zur Montage an einem Plattenheizkörper, umfassend zumindest ein Befestigungselement und ein Aufnahmegehäuse oder einen Montagerahmen.

Plattenheizkörper bestehen in der Regel aus einer, vorzugsweise aus zumindest zwei Platten, welche in einem definierten Abstand zueinander angeordnet sind und mithilfe von Anschlussverschraubungen die Zufuhr von vorgewärmtem Heizungswasser und die Ableitung des abgekühlten Heizungswassers vorsehen. Über die Fläche des Plattenheizkörpers und eventuellen Profilierungen wird die Wärme unmittelbar an den Raum abgegeben. In der Regel werden derartige Plattenheizkörper zusätzlich mit einem Thermostatventil ausgestattet, sodass in einem begrenzten Umfang eine Temperaturregelung innerhalb eines Raumes möglich ist. Unabhängig von einem Thermostatventil können steuerungstechnisch weitere Regelungen beispielsweise an der Heizungsanlage vorgesehen sein, um beispielsweise eine Nachtabsenkung über die Heizungsanlage vorzunehmen. Darüber hinaus kann mithilfe eines Außenfühlers die Heizkurve beeinflusst werden, sodass witterungsabhängig von der Heizungsanlage genügend warmes Wasser zur Verfügung gestellt wird, um die angeschlossenen Räume aufzuheizen. In Abhängigkeit der Witterungslage kann hierbei die Heizungsanlage unter Volllast oder gegebenenfalls auch mit verminderter Last arbeiten.

Je nach Wärmebedarf kann die zugeführte Wärme zu den einzelnen Plattenheizkörpern aufgrund der Geometrie des Plattenheizkörpers nicht optimal abgestrahlt werden, sodass ein Großteil der zugeführten Wärme über die Rückflussleitung im Heizungskreislauf zirkuliert, wodurch Wärmeverluste entstehen. Die Abgabe der Wärmemenge wird hierbei im Wesentlichen durch die Oberfläche eines derartigen Plattenheizkörpers und eventueller Wärmeabstrahlungsflächen bestimmt. Die durch den Plattenheizkörper erwärmte Raumluft wird bei den herkömmlichen Plattenheizkörpern nur durch die aufsteigende Luft und die damit einhergehende Luftströmung übertragen. Die im Plattenheizkörper gespeicherte Wärme kann daher nicht immer optimal an den zu erwärmenden Raum abgegeben werden.

Aus der DE 199 08 403 A1 ist eine Halterung für eine Luftzirkulationseinheit bekannt, welche zur Montage an einem Plattenheizkörper im oberen Bereich vorgesehen ist. Das hierbei verwendete Lüftungsgebläse befindet sich im oberen Bereich der Heizkörperverkleidung und sitzt somit oberhalb der Heizplatten auf. Zur Befestigung des Lüftungsgebläses sind zwei formschlüssig zusammenwirkende Stützen vorgesehen, welche mit einer U-förmigen Tasche des Gehäuses auf dem oberen Rand der hinteren Heizkörperplatte aufgesetzt wird. Die bekannte Lösung für die Montage eines Lüftungsgebläses sieht keine besondere Arretierung vor, weil dieses auf den oberen Rand des Plattenheizkörpers aufgesetzt wird und im Weiteren durch die Heizkörperverkleidung vollständig verdeckt liegend angeordnet ist. Eine solche Lösung sieht zwingend vor, dass gleichzeitig eine Heizkörperverkleidung angebracht wird, oder kann ausschließlich nur bei neu zu Installierenden Heizkörpern eingesetzt werden. Eine nachträgliche Montage bei bereits eingebauten Plattenheizkörpern ist nur bei gleichzeitiger Anbringung einer Heizkörperverkleidung möglich und führt damit zu deutlich höheren Kosten für den Umbau.

Der vorliegenden Erfindung liegt daher die Aufgabe zugrunde, einen verbesserten Wärmeaustausch des Plattenheizkörpers mit der Raumluft zu ermöglichen und eine nachträgliche Montage zu gewährleisten.

Erfindungsgemäß ist zur Lösung der Aufgabe vorgesehen, dass das wenigstens eine Befestigungselement einenends zur Montage an einer unteren Schweißnaht eines Plattenheizkörpers vorgesehen ist und anderenends mittelbar oder unmittelbar mit dem Aufnahmegehäuse oder dem Montagerahmen verbunden ist, wobei das Befestigungselement eine erste Nut zur Aufnahme der Schweißnaht aufweist und durch eine Schraube festlegbar ist. Weitere vorteilhafte Ausgestaltungen der Erfindung ergeben sich aus den Unteransprüchen.

Um die im Plattenheizkörper befindliche Temperatur optimal an die zu erwärmenden Raumluft abzugeben oder falls diese zu Kühlzwecken eingesetzt werden zu kühlen, wird gemäß der vorliegenden Erfindung eine Halterung für eine Luftzirkulationseinheit eingesetzt, die über wenigstens ein Befestigungselement an einer Platte der Plattenheizkörper gehalten wird, wobei das Befestigungselement einenends zur Montage an der Schweißnaht eines Plattenheizkörpers vorgesehen ist und anderenends unmittelbar mit einem Aufnahmegehäuse oder Montagerahmen der Luftzirkulationseinheit verbunden ist. Die Befestigungselemente ermöglichen somit eine einfache Montage an der Schweißnaht, wobei sich die Schweißnaht zur Befestigung hervorragend eignet, weil diese äußerst stabil ausgebildet ist und demzufolge das Befestigungselement mithilfe von Befestigungsmitteln festgelegt werden kann, ohne dass Beschädigungen des Plattenheizkörpers eintreten. Letztendlich dienen die Befestigungselemente dazu, die Luftzirkulationseinheit zu halten, wobei ein Teil des Aufnahmegehäuses oder ein Teil des Montagerahmens, bevorzugt eine vordere Befestigungsschiene, mit dem Befestigungselement verbunden sein kann. Um eine mittelbare Befestigung zu ermöglichen, können beispielsweise gebogene Elemente eingesetzt werden, die einerseits an den Befestigungselementen festlegbar sind, aber zusätzlich mit dem Aufnahmegehäuse verbunden sind.

Ein einzelnes Befestigungselement kommt in diesem Fall dann zum Einsatz, wenn ein relativ schmal ausgeführter Plattenheizkörper vorliegt. Soweit jedoch die Plattenheizkörper in der Breite größer dimensioniert sind, können mehrere Befestigungselemente über die Breite verteilt angeordnet sein, sodass auch größere Aufnahmegehäuse oder Montagerahmen sicher gehalten werden. Alternativ besteht die Möglichkeit, dass ein einzelnes Befestigungselement verwendet wird, welches annähernd der Breite des Plattenheizkörpers entspricht und somit aufgrund der vorliegenden Abmessungen ebenfalls ein Aufnahmegehäuse oder einen Montagerahmen sicher halten kann. Die Breite des Befestigungselementes kann hierbei gegenüber der Größe des Plattenheizkörpers variieren, beispielsweise dann, wenn die Anschlussleitungen des Plattenheizkörpers seitlich angeordnet sind. In diesem Fall kann sich das Befestigungselement über die gesamte Breite des Plattenheizkörpers erstrecken. Soweit jedoch die Anschlussverschraubungen senkrecht nach unten weisen, wird ein Befestigungselement mit deutlich reduzierter Länge eingesetzt, sodass die Anschlussverschraubungen frei zugänglich sind. Aufgrund der jeweiligen Größe der Plattenheizkörper kann aber ebenso wie bei mehreren einzelnen Befestigungselementen eine sichere Halterung des Aufnahmegehäuses oder Montagerahmens gewährleistet werden.

Soweit mehrere einzelne Befestigungselemente zum Einsatz kommen, können diese mit einem linken oder rechten Abschlussblech oder Seitenblech ausgestattet sein, wobei derartige Befestigungselemente im Randbereich des Plattenheizkörpers positioniert werden und durch das Abschlussblech oder Seitenblech ein Einblick unter dem Plattenheizkörper zumindest in den Bereich, in dem sich das Aufnahmegehäuse oder der Montagerahmen befindet, verwehrt wird.

In Ausgestaltung der Erfindung ist vorgesehen, dass das Befestigungselement eine erste breite Nut zur Aufnahme der Schweißnaht und hierzu senkrecht angeordnete Durchbrüche in Höhe der Nut zur Aufnahme eines Arretierelementes aufweist. Die erste Nut der Befestigungselemente ermöglicht ein Aufsetzen auf die Schweißnaht, wobei durch die senkrecht angeordneten Durchbrüche in Höhe der Nut mithilfe von Arretierelementen eine Befestigung erfolgen kann.

In Ausgestaltung der Erfindung ist vorgesehen, dass das Befestigungselement eine zweite schmale Nut in der Ebene der ersten Nut oder rechtwinklig zu dieser Ebene aufweist oder dass das Befestigungselement mehrere Gewindebohrungen zur Aufnahme eines Arretierelementes senkrecht zur Ebene der ersten Nut oder in einer parallel verschobenen Ebene zur ersten Nut aufweist. Die zweite, wesentlich schmalere Nut des Befestigungselementes dient vorzugsweise zur Aufnahme eines Teils des Aufnahmegehäuses oder des Montagerahmens, wobei es sich beispielsweise um eine Seitenwand oder ein Bodenblech handeln kann, um das Aufnahmegehäuse oder den Montagerahmen in einer horizontalen Position zu halten. Aus diesem Grunde ist die zweite Nut entweder in der Ebene der ersten Nut oder rechtwinklig zu dieser Ebene ausgerichtet. Durch diese Alternativen wird sichergestellt, dass unterschiedliche Formen von Aufnahmegehäusen oder Montagerahmen gehalten werden können. Zur Befestigung des Aufnahmegehäuses oder Montagerahmens kann das Befestigungselement mehrere Gewindebohrungen aufweisen, welche senkrecht zur Ebene der ersten Nut oder in einer parallel verschobenen Ebene zur ersten Nut ausgerichtet sind. Die Gewindebohrung dient zur Aufnahme eines Arretierelementes in Form eines Gewindebolzens, der in die Gewindebohrung eingedreht werden kann und somit eine Verklemmung des Befestigungselementes mit einem Teil des Aufnahmegehäuses oder Montagerahmens ermöglicht.

Um den Charakter und den ästhetischen Gesamteindruck des Plattenheizkörpers zu verbessern, ist in weiterer Ausgestaltung vorgesehen, dass die Befestigungselemente und das Aufnahmegehäuse oder der Montagerahmen durch eine Blende, welche annähernd über die gesamte Breite des Plattenheizkörpers ausgebildet ist, verdeckt sind. Die hierbei zum Einsatz kommende Blende kann beispielsweise mithilfe von Magneten, Klipsen oder korrespondierenden Klemmelementen unmittelbar mit dem Befestigungselement oder dem Montagerahmen verbunden werden, sodass ebenfalls eine sichere Verankerung der Blende gewährleistet ist. Vorzugsweise werden die Blenden hierbei an die Standardgrößen der Plattenheizkörper angepasst, sodass diese nicht nur den vorderen Bereich das Aufnahmegehäuse verdecken können, sondern auch im seitlichen Bereich, wenn beispielsweise Blenden mit abgewinkelten Enden eingesetzt werden. Zusätzlich kann über die Blende und das Befestigungshalter im Einzelfall auch eine Befestigung des Aufnahmegehäuses oder Montagerahmens erfolgen.

In weiterer Ausgestaltung der Erfindung ist vorgesehen, dass das Aufnahmegehäuse flachbauend ausgebildet zur Aufnahme zumindest eines Lüfters vorgesehen ist. Durch die flachbauende Ausführungsform des Aufnahmegehäuses oder Montagerahmens besteht die Möglichkeit, dieses unmittelbar unter den Plattenheizkörper zu montieren, wobei in dem Aufnahmegehäuse oder Montagerahmen zumindest ein, vorzugsweise mehrere Lüfter eingebaut werden, die ebenfalls flachbauend ausgebildet sind und fluchtend zu den Lüftungsdurchbrüchen montiert werden, sodass die Luft zwischen die Platten des Plattenheizkörpers einströmen kann und damit eine erhöhte Wärmeübertragung vom Plattenheizkörper auf die Raumluft oder umgekehrt ermöglicht wird. Bei den Lüftungsdurchbrüchen handelt es sich um Öffnungen innerhalb des Aufnahmegehäuses, die sich beispielsweise im Bodenblech befinden.

Alternativ besteht die Möglichkeit, dass bei einem Aufnahmegehäuse mit einem oberen Deckblech die Durchbrüche in diesem angeordnet sind, während hingegen das Aufnahmegehäuse unten entweder völlig offen gestaltet ist oder ggf. ein Bodenblech mit Durchbrüchen aufweist, sodass die Lüfter zwischen einem oberen und unteren Durchbruch angeordnet sind. Hinzu kommt, dass die Lüftungsdurchbrüche des Aufnahmegehäuses fluchtend zwischen den Platten des Plattenheizkörpers angeordnet werden, sodass die Luft zwischen die Platten des Plattenheizkörpers einströmen kann und damit eine erhöhte Wärmeübertragung vom Plattenheizkörper auf die Raumluft ermöglicht wird.

Um das Eindringen von Fremdkörpern in die Lüfter zu verhindern, können die Lüftungsdurchbrüche eine gitterförmig ausgebildete Abdeckung aufweisen oder die vorhandenen Lüftungsdurchbrüche werden so ausgestanzt, dass viele einzelne Durchbrüche zu einem gitterartigen Gesamtdurchbruch führen, um eine optimale Luftzirkulation zu ermöglichen.

Vorzugsweise wird die Blende, welche die gesamte Halterung für die Luftzirkulationseinheit verdecken soll, aus einem vorderen U-förmig gebogenen Blechstreifen hergestellt, der mithilfe von Magneten beispielsweise an der vorderen Befestigungsschiene eines Montagerahmens gehalten wird. Ein längerer Schenkel des Blechstreifens dient hierbei zur Befestigung eines Bodenbleches mithilfe von Klemmen, die über die gesamte Breite der Blende verteilt angeordnet sind.

In besonderer Ausgestaltung der Erfindung ist vorgesehen, dass das Bodenblech unter einem Winkel von 10 bis 30 Grad gegenüber der Horizontalen geneigt ausgerichtet ist, sodass eine deutlich verbesserte Luftströmung aus dem zu erwärmenden oder zu kühlenden Raum mithilfe der Lüfter erfolgen kann. Durch den Neigungswinkel wird erreicht, dass an der Vorderkante des Plattenheizkörpers eine deutlich vergrößerte Luftzuführung erfolgen kann. Das hierbei verwendete Bodenblech kann sich hierbei nur über einen Teilbereich der Breite des Plattenheizkörpers erstrecken oder durchgehend ausgebildet sein und mit Luftdurchtrittsöffnungen versehen sein, durch welche die Luft angesaugt und zwischen die einzelnen Platten des Plattenheizkörpers mithilfe der Lüfter eingeströmt wird.

In weiterer Ausgestaltung der Erfindung kann hierbei vorgesehen sein, dass die Lüfter der Aufnahmegehäuse in Abhängigkeit von der Raumtemperatur, aber ebenso in Abhängigkeit von der Zulauftemperatur und Ablauftemperatur des Heizungswassers geregelt werden. Beispielsweise könnten die Lüfter immer dann eingeschaltet werden, wenn ein höherer Wärmebedarf für einen bestimmten Raum erforderlich ist. Um einen übermäßigen Wärmestau in dem Plattenheizkörper zu vermeiden, könnte bei einer bestimmten Temperaturdifferenz zwischen der Zulauftemperatur und der Ablauftemperatur eine Einschaltung der Lüfter vorgesehen sein. Darüber hinaus besteht die Möglichkeit, sofern eine Zwangsbelüftung eines Wohn- oder Geschäftsraumes vorgesehen ist, dass immer dann, wenn eine Strömungsrichtung aus dem Raum nach außen vorliegt, beispielsweise die Lüfter ausgeschaltet werden, während hingegen, wenn die umgekehrte Strömungsrichtung vorliegt, die Lüfter eingeschaltet werden, um somit die Raumluft zeitnah erneut zu temperieren.

In besonderer Ausgestaltung der Erfindung ist vorgesehen, dass ein Bodenblech des Aufnahmegehäuses oder Montagerahmens am diametral entgegengesetzten Ende zu den Befestigungselementen eine Abwinkelung um 180 Grad aufweist. Diese Abwinkelung dient dazu, um ein weiteres Bodenblech aufzunehmen, welches einen besonderen Zweck erfüllen soll. In dieser Abwinkelung soll das zweite Bodenblech einschiebbar gestaltet sein, welches zusätzlich über zumindest ein Befestigungselement gehalten ist. Das weitere Bodenblech mit Luftdurchtrittsöffnungen dient beispielsweise zur Aufnahme eines Filtermaterials, während eine Ausführungsvariante ohne Luftdurchtrittsöffnung als Wasservorratschale eingesetzt werden kann. Somit besteht die Möglichkeit, mit dem zweiten Bodenblech entweder eine Luftbefeuchtung vorzunehmen, oder die Luft zusätzlich zu filtern.

In weiterer besonderer Ausgestaltung der Erfindung ist vorgesehen, dass ein Halteblech an der hinteren Befestigungsschiene montiert ist und am diametral entgegengesetzten Ende zu den Befestigungselementen eine Abwinkelung von 180 Grad aufweist. Diese Abwinkelung dient dazu, ein weiteres Bodenblech aufzunehmen, welches einen besonderen Zweck erfüllen soll. In dieser Abwinkelung soll das zweite Bodenblech einschiebbar gestaltet sein, welches zusätzlich über zumindest ein Befestigungselement gehalten ist. Das weitere Bodenblech mit Luftdurchtrittsöffnungen dient beispielsweise zur Aufnahme eines Filtermaterials, während eine Ausführungsvariante ohne Luftdurchtrittsöffnung als Wasservorratschale eingesetzt werden kann. Somit besteht die Möglichkeit, mit dem zweiten Bodenblech entweder eine Luftbefeuchtung vorzunehmen, oder die Luft zusätzlich zu filtern.

In Ausgestaltung der Erfindung ist ferner vorgesehen, dass die hintere Befestigungsschiene mit einem um 120 Grad umgebogenen Halteblech verbunden ist, welches zur Aufnahme des Bodenbleches verwendet werden kann. Das Halteblech dient hierbei als zusätzliche Stützungsmaßnahme des Bodenbleches oder kann alternativ dazu verwendet werden, ein zweites Bodenblech vorzusehen, welches beispielsweise als Wasserschale oder zur Aufnahme einer Filtereinheit verwendet werden kann.

In weiterer besonderer Ausgestaltung der Erfindung ist vorgesehen, dass das Bodenblech eine vordere Abkantung aufweist, auf welche eine Blende aufsetzbar ist, oder dass das Bodenblech eine vordere gerade oder gebogen verlaufende Verlängerung aufweist, welche in der zweiten Nut des Befestigungselementes einliegt und die Halterung des Aufnahmegehäuses ermöglicht. Zur optischen Gestaltung der Anordnung, bestehend aus Aufnahmegehäuse und Befestigungselement, kann die Blende eingesetzt werden, die auf eine vordere Abkantung des Bodenbleches aufsetzbar ist oder direkt mit dem Befestigungselement verbunden ist. Alternativ besteht wiederum die Möglichkeit, dass das Bodenblech eine vordere gerade oder gebogen verlaufene Verlängerung aufweist, welche dann in der zweiten Nut des Befestigungselementes einliegt und arretiert werden kann. Als Arretierelemente kommen beispielsweise Madenschrauben, Gewindebolzen, gegebenenfalls mit einem Rändelkopf, oder federnd beaufschlagte Rastelemente infrage. Die Rastelemente werden hierbei vorzugsweise in derart mit Federn vorgespannt, dass diese in einer Bohrung einliegend und eine in Richtung auf die Schweißnaht des Plattenheizkörpers einwirkende Kraft ausüben, sodass die Befestigungselemente bereits durch die Rastelemente sicher am Plattenheizkörper beziehungsweise an dem Rand des Plattenheizkörpers gehalten werden.

Als Arretierelemente kommen beispielsweise Madenschrauben, Gewindebolzen, gegebenenfalls mit einem Rändelkopf, oder federnd beaufschlagte Rastelemente infrage. Die Rastelemente werden hierbei vorzugsweise in derart mit Federn vorgespannt, dass diese in einer Bohrung einliegend und eine in Richtung auf die Schweißnaht des Plattenheizkörpers einwirkende Kraft ausüben, sodass die Befestigungselemente bereits durch die Rastelemente sicher am Plattenheizkörper beziehungsweise an dem Rand des Plattenheizkörpers gehalten werden.

In besonderer Ausgestaltung der Erfindung ist vorgesehen, dass die Liftzirkulationseinheit Lüfter beinhaltet, wobei oberhalb der montierten Lüfter ein Luftleitblech angeordnet ist, welches im vorgesehenen Rasterabstand der Lüfter jeweils zwei nach oben abgewinkelte Blechstreifen aufweist, welche zum Teil über dem Lüfter und zum Teil über dem Zwischenraum angeordnet sind. Mithilfe der Luftleitbleche wird über jedem einzelnen Lüfter erreicht, dass die Lüfter die Luft nicht senkrecht nach oben ausrichten, sondern über die gesamte Breite des Plattenheizkörpers gleichmäßig verteilen, wodurch eine wesentlich bessere Erwärmung oder Abkühlung der aufsteigenden Luft durch die gesamte Breite des Plattenheizkörpers gewährleistet ist.

In Ausgestaltung der Erfindung ist vorgesehen, dass zumindest ein Seitenblech zur Aufnahme von Schaltelementen und/oder Einstellreglern vorgesehen ist. Hinter dem Seitenblech wird bei dieser Ausführungsvariante die Steuerungselektronik angeordnet und mithilfe von Schaltelementen, welche durch das Seitenblech nach außen hervorstehen, bedient. Über die ebenfalls in dem Seitenblech vorgesehenen Einstellregler, beispielsweise in Form eines Potentiometers, kann hierbei der Einschaltpunkt und die Drehzahl der Lüfter eingestellt werden.

In weiterer Ausgestaltung der Erfindung kann hierbei vorgesehen sein, dass die Lüfter in Abhängigkeit von der Raumtemperatur, aber ebenso in Abhängigkeit von der Zulauftemperatur und Ablauftemperatur des erwärmten Heizungswassers geregelt werden. Beispielsweise könnten die Lüfter immer dann eingeschaltet werden, wenn ein höherer Wärmebedarf für einen bestimmten Raum erforderlich ist. Um einen übermäßigen Wärmestau in dem Plattenheizkörper zu vermeiden, könnte bei einer bestimmten Temperaturdifferenz zwischen der Zulauftemperatur und der Ablauftemperatur eine Einschaltung der Lüfter erfolgen. Darüber hinaus besteht die Möglichkeit, sofern eine Zwangsbelüftung eines Wohn- oder Geschäftsraumes vorgesehen ist, dass immer dann, wenn eine Strömungsrichtung aus dem Raum nach außen vorliegt, beispielsweise die Lüfter ausgeschaltet werden, während hingegen, wenn die umgekehrte Strömungsrichtung vorliegt, die Lüfter eingeschaltet werden, um somit die Raumluft zeitnah erneut zu temperieren.

Durch die Luftzirkulationseinheit besteht aber nicht nur die Möglichkeit, eine optimale Erwärmung der Raumluft zu erzielen, sondern es können auch Kühlmaßnahmen durchgeführt werden. In den Sommermonaten, wenn die Heizung nicht benötigt wird, kann anstelle des erwärmten Wassers innerhalb des Plattenheizkörpers eine Kühlung desselben erfolgen, sodass die Vorlauftemperatur gegenüber der Raumtemperatur deutlich abgesenkt ist. Mithilfe der Luftzirkulationseinheit kann in diesem Fall die vorhandene Raumluft unten angesaugt und durch die Lüfter in verwirbelter Form zwischen die einzelnen Platten des Plattenheizkörpers eingeströmt werden, sodass eine Abkühlung der Raumluft erfolgen kann. Die Abkühlung ist hierbei maßgeblich davon abhängig, mit welchen Temperaturen innerhalb des Platten heizkörpers bzw. Plattenkühlkörpers gearbeitet werden kann. Je niedriger die Temperatur gewählt wird, umso effektiver kann die Raumluft in den Sommermonaten abgekühlt werden. Die erfindungsgemäße Halterung und Luftzirkulationseinheit kann hierbei sowohl für eine optimierte Wärmeabgabe im Winter als auch für eine optimierte Kühlung der Raumluft im Sommer herangezogen werden.

Um ein möglichst geringes Gewicht der Halterung für die Luftzirkulationseinheit zu erhalten und die Montage so einfach wie möglich zu gestalten, ist in weiterer Ausgestaltung der Erfindung vorgesehen, dass ein Montagerahmen aus einer ersten und zweiten beabstandeten Befestigungsschiene, einem Verbindungsprofil und stirnseitigen Seitenblechen besteht. Die beiden Befestigungsschienen verlaufen nach der Montage parallel und sind beabstandet, sodass die Lüfter unmittelbar mit den Befestigungsschienen verschraubt werden können. Die kopfseitigen Abschlüsse werden durch die Seitenbleche hergestellt, welche über ein Verbindungsprofil, bevorzugt ein Winkelprofil, zusätzlich mit den Befestigungsschienen verbunden werden können.

In Ausgestaltung der Erfindung ist vorgesehen, dass die Befestigungselemente zur Halterung zumindest eines Temperatursensors vorgesehen sind. Der Temperatursensor wird dazu verwendet, um eine Steuerung der Lüfter vornehmen zu können und wird vorzugsweise in den Befestigungselementen innerhalb einer Bohrung oder dergleichen integriert, damit der Temperatursensor annähernd die Temperatur des Plattenheizkörpers erfassen kann. Dadurch, dass die Befestigungselemente unmittelbar an einer unteren Schweißnaht einer Platte des Plattenheizkörpers befestigt werden, ist insofern gewährleistet, dass die Befestigungselemente annähernd die Temperatur des Plattenheizkörpers annehmen und somit die Temperatur erfasst werden kann.

In weiterer Ausgestaltung der Erfindung ist vorgesehen, dass das Montagerahmen flachbauend ausgebildet zur Aufnahme zumindest eines Lüfters vorgesehen ist. Durch die flachbauende Ausführungsform des Montagerahmens besteht die Möglichkeit, dieses unmittelbar unter den Plattenheizkörper zu montieren, wobei in dem Montagerahmen zumindest ein, vorzugsweise mehrere Lüfter eingebaut werden, die ebenfalls flachbauend ausgebildet sind und fluchtend zu den Platten des Plattenheizkörpers montiert werden.

Die besonderen Vorteile der vorliegenden Erfindung bestehen darin, dass mithilfe herkömmlicher Plattenheizkörper eine wesentlich bessere Ausnutzung der von der Heizanlage gelieferten Wärmeenergie möglich ist. Mithilfe der Lüfter, welche in den Aufnahmegehäusen oder Montagerahmen eingebaut sind, wird eine erhöhte Luftzirkulation im Bereich der Plattenheizkörper erzeugt, sodass die Wärmeabstrahlung wesentlich effektiver durchgeführt werden kann. Durch die zusätzliche Luftzirkulation ist es beispielsweise möglich, die Vorlauftemperatur der Heizungsanlage deutlich abzusenken, weil die Wärmeabstrahlung verbessert wird. Durch die Lüfter wird hierbei die Wärmeabstrahlung der Plattenheizkörper positiv beeinflusst, weil ein verbesserter Wärmeübergang auf die Raumluft erzielt wird, sodass genügend Wärmeenergie für einen bestimmten Raum zur Verfügung steht. Die auftretenden Verluste in den Zuleitungsrohren werden minimiert und ebenso der Wirkungsgrad der Heizungsanlage dadurch deutlich verbessert, da diese in einem niedrigeren Temperaturbereich gefahren werden kann. In bevorzugter Ausgestaltung der Erfindung können zusätzlich Wasserschalen oder Filtereinheiten zum Einsatz kommen, welche mit dem Aufnahmegehäuse kombiniert werden und somit die Behaglichkeit von Gewerbe- und Wohnräumen deutlich steigern. Erste Versuchsaufbauten und durchgeführte Messungen zeigen, dass eine deutlich verbesserte Wärmeabgabe an die zu heizenden Räume eintritt und zu einer Heizkostenersparnis führt, weil das erwärmte Wasser auf dem Transportweg zu dem Plattenheizkörper weniger Temperaturverluste erleidet. Ein weiterer wesentlicher Punkt der vorliegenden Erfindung besteht darin, dass diese auch in den Sommermonaten zur Kühlung eingesetzt werden kann, wenn beispielsweise durch die Plattenheizkörper das an sich zur Erwärmung vorgesehene Medium insoweit herabgekühlt wird, dass ein Unterschied zwischen der zulaufenden Temperatur und der Raumtemperatur besteht und mithilfe der Luftzirkulationseinheit eine Abkühlung der Raumluft erfolgen kann.

Die Erfindung wird im Nachfolgenden anhand der Figuren nochmals erläutert.

Es zeigt
- Fig. 1: in einer Seitenansicht eine erste Ausführungsform eines Befestigungselementes und eines Aufnahmegehäuses,
- Fig. 2: in einer perspektivischen Ansicht und einer Vorderansicht eine zweite Ausführungsform eines Befestigungselementes und eines Aufnahmegehäuses,
- Fig. 3: in einer Seitenansicht und Vorderansicht eine dritte Ausführungsform eines Befestigungselementes und eines Aufnahmegehäuses,
- Fig. 4: in einer Seitenansicht und einer Explorationsdarstellung eine vierte Ausführungsvariante mit einer zusätzlichen Blende,
- Fig. 5: in einer perspektivischen Explorationsansicht das Ausführungsbeispiel mit einer Blende gemäß Figur 4,
- Fig. 6: in einer Seitenansicht und einer Explorationsdarstellung eine fünfte Ausführungsvariante,
- Fig. 7: in einer perspektivischen Explorationsansicht die Ausführungsform gemäß Figur 6,
- Fig. 8: in einer Seitenansicht und in einer perspektivischen Ansicht eine Ausführungsform mit einem zusätzlichen Bodenblech,
- Fig. 9: in einer perspektivischen Explorationsdarstellung die aus Figur 8 bekannte Ausführungsform,
- Fig. 10: in jeweils einer Seitenansicht und einer perspektivischen Ansicht drei verschiedene Ausführungsformen eines Befestigungselementes und
- Fig. 11: in einer Seitenansicht und einer perspektivischen Ansicht weitere drei Ausführungsformen eines Befestigungselementes,
- Fig. 12: in einer perspektivischen Ansicht eine Halterung für eine Luftzirkulationseinheit zur Montage an einem Plattenheizkörper,
- Fig. 13: in einer perspektivischen Ansicht die aus Figur 12 bekannte Halterung mit abgenommener Blende,
- Fig. 14: in einer Seitenansicht die Halterung mit abgenommener Blende gemäß Figur 13,
- Fig. 15: in einer perspektivischen Explosionsdarstellung die Halterung für eine Luftzirkulationseinheit gemäß Figur 12,
- Fig. 16: in einer Seitenansicht die Halterung gemäß Figur 12 ohne Seitenblende mit zusätzlichen Halteblechen,
- Fig. 17: in einer vergrößerten Ansicht einen Ausschnitt der Halterung mit einem Lüfter und den Verbindungselementen zwischen den Befestigungsprofilen und Seitenblenden sowie dem Befestigungselement,
- Fig. 18: in einer perspektivischen Explosionsansicht die Halterung im Umfang der Befestigungsschienen, Seitenbleche und Lüfter,
- Fig. 19: in einer perspektivischen Vorderansicht einen Plattenheizkörper mit Halterung für eine Luftzirkulationseinheit,
- Fig. 20: in einer Seitenansicht einen Plattenheizkörper mit Halterung für eine Luftzirkulationseinheit und dargestellter Seitenblende sowie Bedienelementen,
- Fig. 21: in eine Seitenansicht einen Plattenheizkörper mit Halterung für eine Luftzirkulationseinheit ohne Seitenblenden gemäß Figur 20,
- Fig. 22: in einer Seitenansicht einen Plattenheizkörper mit Halterung für eine Luftzirkulationseinheit, welche die Montagewand nicht berührt,
- Fig. 23: in einer Seitenansicht einen Plattenheizkörper mit Halterung für eine Luftzirkulationseinheit, die bis zur Wand ausgebildet ist,
- Fig. 24: in einer perspektivischen Explosionsdarstellung die Seitenblende mit Schaltelement und Kontrollelementen,
- Fig. 25: in einer weiteren perspektivischen Explosionsdarstellung die Seitenblende mit Schalt- und Einstellreglern gemäß Figur 24,
- Fig. 26: in einer perspektivischen Ansicht eine Halterung für eine Luftzirkulationseinheit gemäß Figur 12, welche zusätzlich mit Luftleitblechen ausgestattet ist,
- Fig. 27: in einer perspektivischen Ansicht eine Halterung für eine Luftzirkulationseinheit gemäß Figur 26 in einer rückwärtigen Ansicht,
- Fig. 28: in einer perspektivischen Explosionsansicht die Halterung für eine Luftzirkulationseinheit gemäß Figur 26 und
- Fig. 29: in einer perspektivischen Ansicht ein Luftleitblech.

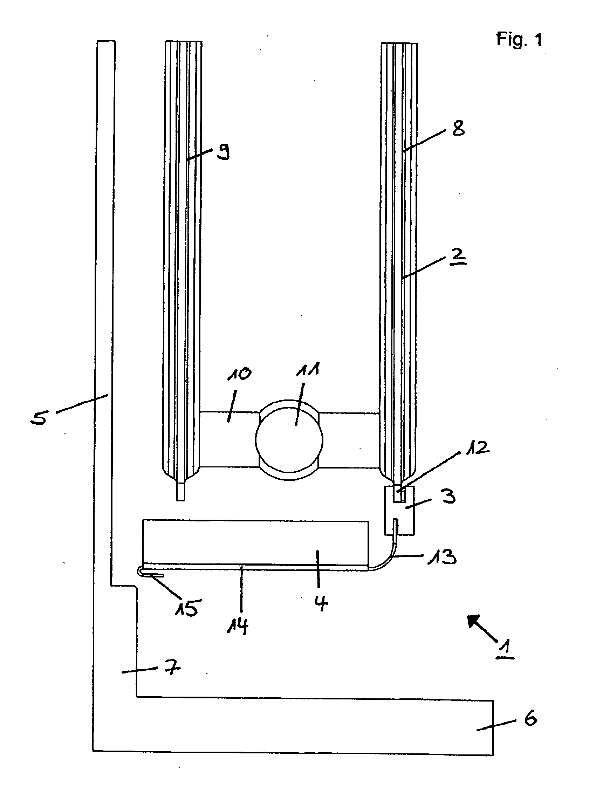

Figur 1 zeigt in einer Seitenansicht eine erste Ausführungsform einer Luftzirkulationseinheit 1, die unterhalb eines Plattenheizkörpers 2 montiert ist. Die Luftzirkulationseinheit 1 besteht aus einem Befestigungselement 3 und einem Aufnahmegehäuse 4. Der Plattenheizkörper 2 ist über eine nicht dargestellte Befestigungskonsole an einer Wand 5 aufgehängt, wobei im unteren Bereich der Fußboden 6 mit einer Fußbodenleiste 7 dargestellt ist.

Der Plattenheizkörper 2 besitzt zwei Platten 8, 9, die über ein Rohrelement 10 miteinander verbunden sind, wobei das Rohrelement 10 über eine horizontale Anschlussverschraubung 11 verfügt. An der vorderen unteren Schweißnaht 12 des Plattenheizkörpers 2 ist das Befestigungselement 3 mithilfe von Arretierungsmitteln festgelegt, wobei das Befestigungselement 3 über ein gebogenes Halteblech 13 das Aufnahmegehäuse 4 abstützt. Das Aufnahmegehäuse 4 besteht im vorliegenden Fall aus einem kastenförmigen Aufbau, in dessen Innerem nicht einsehbare Lüfter angeordnet sind. Darüber hinaus besitzt das Aufnahmegehäuse 4 ein Bodenblech 14, welches gegebenenfalls einstückig mit dem Halteblech 13 verbunden sein kann oder verschraubt ist. Im rückwärtigen Bereich besitzt das Bodenblech 14 eine um 180 Grad geführte Abwinkelung 15, welche beispielsweise zur Aufnahme von weiteren Elementen, insbesondere eines zweiten Bodenbleches verwendet werden kann.

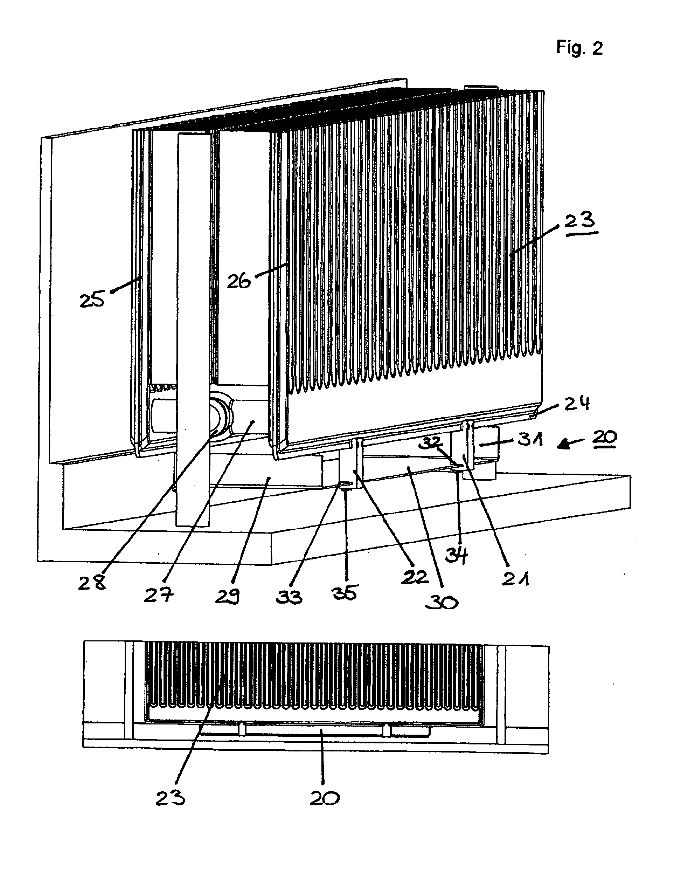

Figur 2 zeigt in einer perspektivischen sowie einer Frontansicht eine weitere Ausführungsform für eine Luftzirkulationseinheit 20. Die Luftzirkulationseinheit 20 ist über Befestigungselemente 21, 22 mit dem Plattenheizkörper 23 verbunden, wobei die beiden Befestigungselemente 21, 22 wiederum an der Schweißnaht 24 des Plattenheizkörpers 23 befestigt sind. Auch in diesem Fall besteht der Plattenheizkörper 23 aus zwei Platten 25, 26, die über ein Rohrelement 27 verbunden sind und eine Anschlussverschraubung 28 aufweisen. Unterhalb des Plattenheizkörpers 23 befindet sich die Luftzirkulationseinheit 20, wobei in diesem Fall zwei einzelne Befestigungselemente 21, 22 zur Halterung des Aufnahmegehäuses 29 vorgesehen sind, welches unter anderem über ein Bodenblech 30 sowie Seitenwandungen 31 verfügt. Das Bodenblech 30 ist in einem vorhandenen Schlitz 32, 33 der beiden Befestigungselemente 21, 22 aufgenommen und mithilfe zweier Schraubbolzen 34, 35 fixiert.

Aus der Vorderansicht ist ersichtlich, dass sich die Luftzirkulationseinheit 20 nicht über die gesamte Breite des Plattenheizkörpers 23 erstreckt, sondern sich lediglich im mittleren Bereich befindet. Wahlweise besteht die Möglichkeit, die Luftzirkulationseinheit 20 gegebenenfalls durch eine Blende zu verdecken, wobei sich die Blende entweder über die Länge der Luftzirkulationseinheit 20 erstreckt oder gegebenenfalls über die gesamte Breite des Plattenheizkörpers.

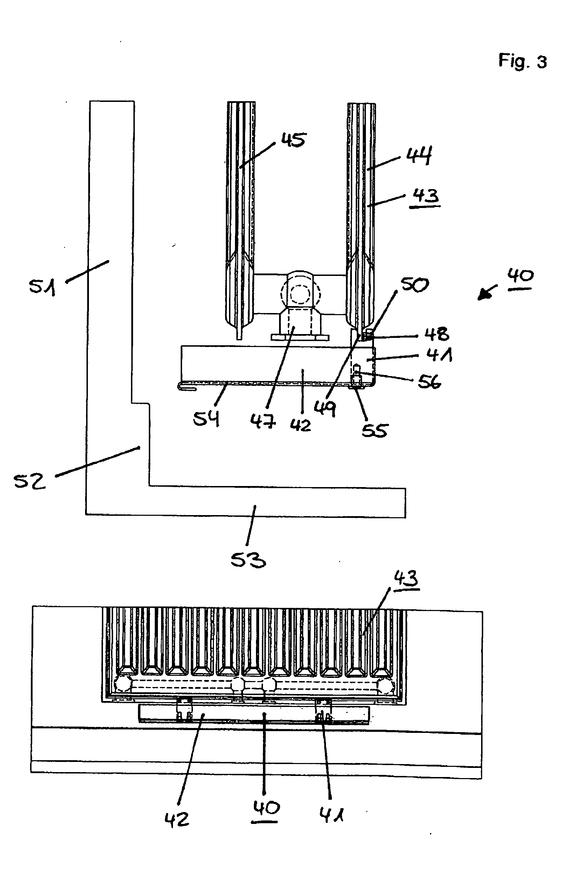

Figur 3 zeigt in einer Seiten- und Vorderansicht eine weitere Ausführungsform einer Luftzirkulationseinheit 40, welche wiederum über ein Befestigungselement 41 die Halterung eines Aufnahmegehäuses 42 vorsieht. Im gezeigten Ausführungsbeispiel sind zwei Befestigungselemente 41 über die Breite des Plattenheizkörpers 43 verteilt angeordnet, wobei der Plattenheizkörper 43 ähnlich wie aus den Figuren 1 bis 2 aufgebaut ist und aus zwei einzelnen Platten 44, 45 sowie einem Rohrelement 46 und einer Anschlussverschraubung 47 besteht. In diesem Fall ist die Anschlussverschraubung 47 vertikal ausgerichtet, sodass sich das Aufnahmegehäuse 42 nicht über die gesamte Breite des Plattenheizkörpers 43 erstreckt. Zusätzlich besteht aber in jedem Fall die Möglichkeit, das Aufnahmegehäuse 42 und die Befestigungselemente 41 mithilfe einer nicht dargestellten Blende abzudecken.

Die Befestigungselemente 41 weisen eine erste Nut 48 auf und sind zur Aufnahme der unteren Schweißnaht 49 des Plattenheizkörpers 43 vorgesehen. Mithilfe eines Arretierelementes, welches in diesem Fall als Madenschraube 50 ausgebildet ist, wird eine Fixierung der Befestigungselemente 41 an der Schweißnaht 49 vorgenommen. Die Montage des Plattenheizkörpers 43 erfolgt hierbei über eine nicht dargestellte Befestigungskonsole an einer Wand 51 mit einer Fußleiste 52, sodass das Aufnahmegehäuse 42 sowohl gegenüber einem Boden 53 als auch der Wand 51 in einem vorhergehenden Abstand gehalten wird. Das Aufnahmegehäuse 42 selbst ist in diesem Fall über das Bodenblech 54 und einem Schraubbolzen 55 mit dem Befestigungselement 41 verbunden. Hierzu ist das Bodenblech 54 vorzugsweise mit zwei Durchbrüchen ausgestattet, in die der Schraubbolzen 55 eingreift und mit seinem Gewindeabschnitt in eine vorhandene Gewindebohrung 56 des Befestigungselementes 41 eingeschraubt werden kann. Insofern wird bei dieser Ausführungsvariante des Befestigungselementes 41 auf eine zweite Nut verzichtet und lediglich mit zwei Schraubbolzen 55 das Aufnahmegehäuse 42 gehalten.

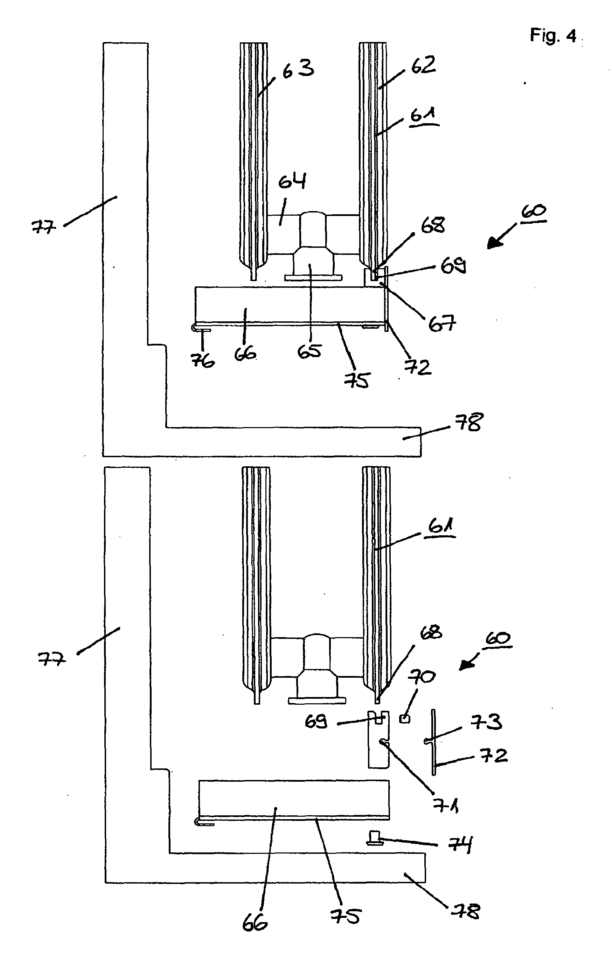

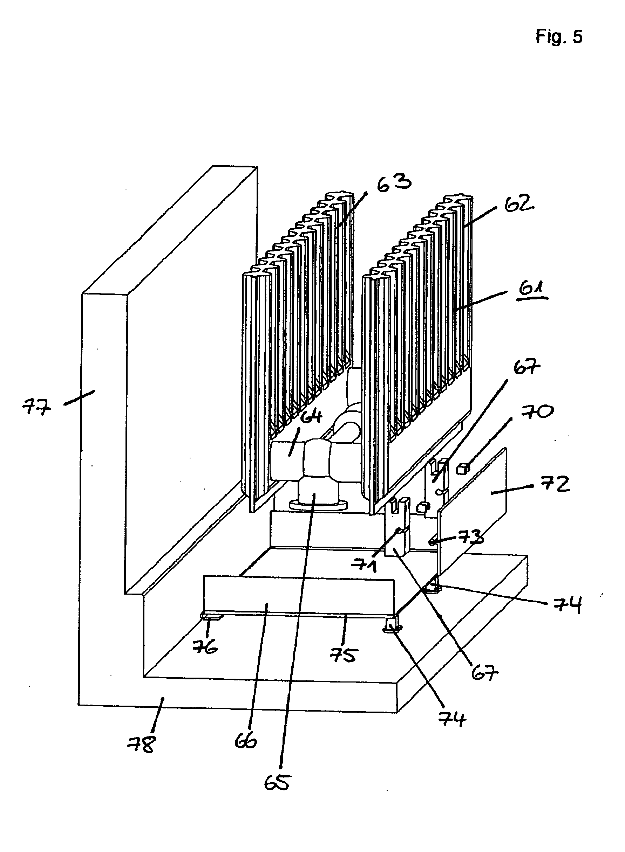

Figur 4 zeigt in einer Seitenansicht und einer seitlichen Explorationsdarstellung eine weitere Ausführungsvariante eines Plattenheizkörpers 60. Aus einer perspektivischen Explorationsdarstellung gemäß Figur 5 wird die Anordnung des Plattenheizkörpers 61, des Aufnahmegehäuses 66 mit einer Blende 72 und den Befestigungselementen 67 nochmals verdeutlicht.

Die Montage der Luftzirkulationseinheit 60 erfolgt an einem Plattenheizkörper 61, welcher aus zwei Platten 62, 63 besteht, die über ein Rohrelement 64 miteinander verbunden sind und über eine vertikal ausgerichtete Anschlussverschraubung 65 verfügen. Unterhalb des Plattenheizkörpers 61 ist ein Aufnahmegehäuse 66 angeordnet, welches in diesem Fall mit zwei Befestigungselementen 67 an der Schweißnaht 68 des Plattenheizkörpers 61 befestigt wird. Die Befestigungselemente 67 ähneln der Ausführungsvariante gemäß Figur 3 und weisen eine obere, breite Nut 69 zur Aufnahme der Schweißnaht 68 auf. Die Befestigung erfolgt über eine Madenschraube 70, die in eine Gewindebohrung der Befestigungselemente 67 einschraubbar ist. Die Befestigungselemente 67 besitzen, wie insbesondere aus der Explorationsdarstellung ersichtlich, eine sich zur Frontfläche hin verjüngende Ausnehmung 71, welche dazu dient, eine Blende 72 mit einer entsprechenden Verdickung 73 aufzunehmen, sodass die Blende 72 beispielsweise über die gesamte Breite des Plattenheizkörpers das Aufnahmegehäuse 66 und die Befestigungselemente 67 verdeckt. Die Halterung des Aufnahmegehäuses 66 erfolgt über zwei Gewindebolzen 74, die in ein Gewinde der Befestigungselemente 67 einschraubbar sind, wobei das Bodenblech 75 des Aufnahmegehäuses 66 zu diesem Zweck korrespondierende Bohrungen aufweist. Wie bereits aus Figur 3 ersichtlich, ist auch bei dieser Lösung das Bodenblech 75 mit einer um 180 Grad vorliegenden Abwinkelung 76 ausgestattet. Diese Abwinkelung 76 dient dazu, im Bedarfsfall ein zweites hier nicht gezeigtes Bodenblech aufzunehmen. Auch in diesem Fall wird der Plattenheizkörper 64 gegenüber einer Wand 77 und einem Boden 78 in einer beabstandeten Position gehalten.

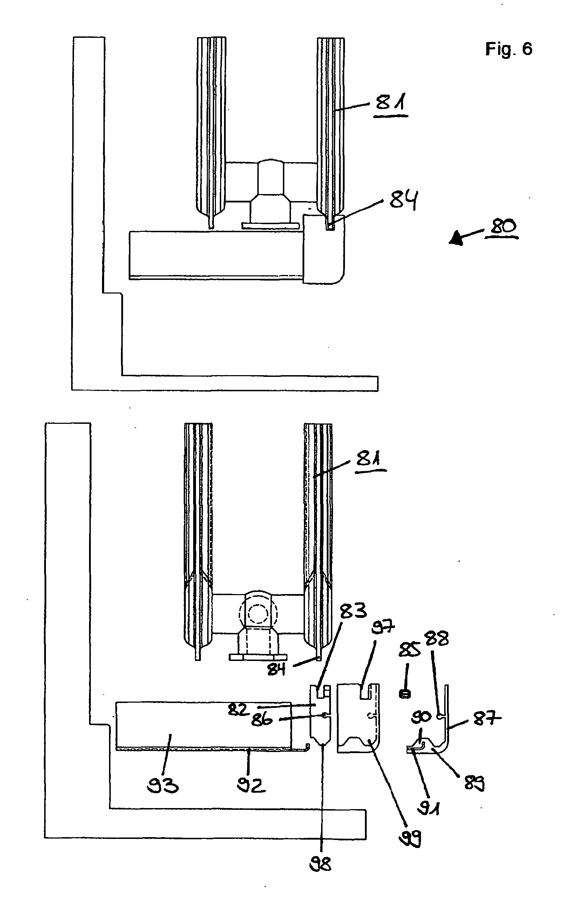

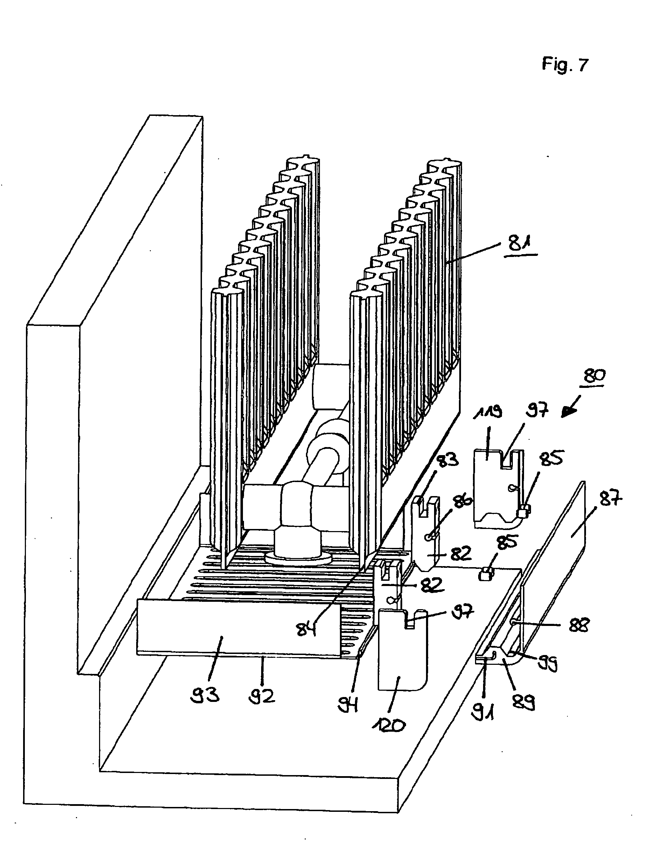

Figur 6 zeigt in einer Seitenansicht und einer seitlichen Explorationsdarstellung eine Luftzirkulationseinheit 80 unterhalb eines Plattenheizkörpers 81, der ähnlich aufgebaut ist, wie aus den Figuren 3 und 4 bekannt. In einer nachfolgenden Figur 7 ist die Explorationsdarstellung zusätzlich in einer perspektivischen Ansicht dargestellt.

Die Befestigung der Luftzirkulationseinheit 80 erfolgt wiederum über ein Befestigungselement 82, welches mit einer Nut 83 an der Schweißnaht 84 des Plattenheizkörpers 81 festgelegt ist. Auch in diesem Fall erfolgt die Festlegung mithilfe einer Madenschraube 85, die in eine korrespondierende Gewindebohrung zur Nut 83 eingeschraubt wird, um das Befestigungselement 82 an der Schweißnaht 84 zu verklemmen. Das Befestigungselement 82 weist im unteren Bereich ein trapezförmiges Ende 98 auf und in der nach vorne weisenden Fläche eine sich nach vorne hin verjüngende Ausnehmung 86 auf, die wiederum zur Aufnahme einer Blende 87 vorgesehen ist, die mithilfe einer korrespondierend angeformten Verdickung 88 in die Vertiefung 86 einrastend aufgenommen wird. Zusätzlich weist die Blende 87 in diesem Fall eine rechtwinklig abgewinkelte und einstückig angeformte Verlängerung 89 auf, die auf der Innenseite eine trapezförmige Erhöhung 90 aufweist und zusätzlich eine L-förmige Nut 91. Die Nut 91 dient zur Aufnahme einer im rechten Winkel vorliegenden Abkantung 94 des Bodenbleches 92. Die trapezförmige Erhöhung 90 korrespondiert mit dem trapezförmigen Vorsprung 98 des Befestigungselementes 82, wobei eine Verklemmung bei der Montage erfolgt. Das Aufnahmegehäuse 93 wird somit über die Abkantung 94, die Blende 87 und die Befestigungselemente 82 gehalten. Die Blende 87 kann sich hierbei über den Frontbereich des Aufnahmegehäuses 93 oder die Breite des Plattenheizkörpers 81 erstrecken. Die Blende 87 wird des Weiteren durch zwei Endkappen 95, 96 verschlossen, welche bis zur Schweißnaht hochgezogen sind und diese in einer Nut 97 aufnehmen. Nach erfolgter Montage verschließen die Endkappen 95, 96 die Blende 87 seitlich und verdecken somit die Befestigungselemente 82.

Die trapezförmige Ende 98 kommt in einer trapezförmigen Vertiefung 99 der Blende 87 zu liegen, sodass eine seitliche oder nach vorne verlagerte Verschiebung des Aufnahmegehäuses 93 ausgeschlossen werden kann.

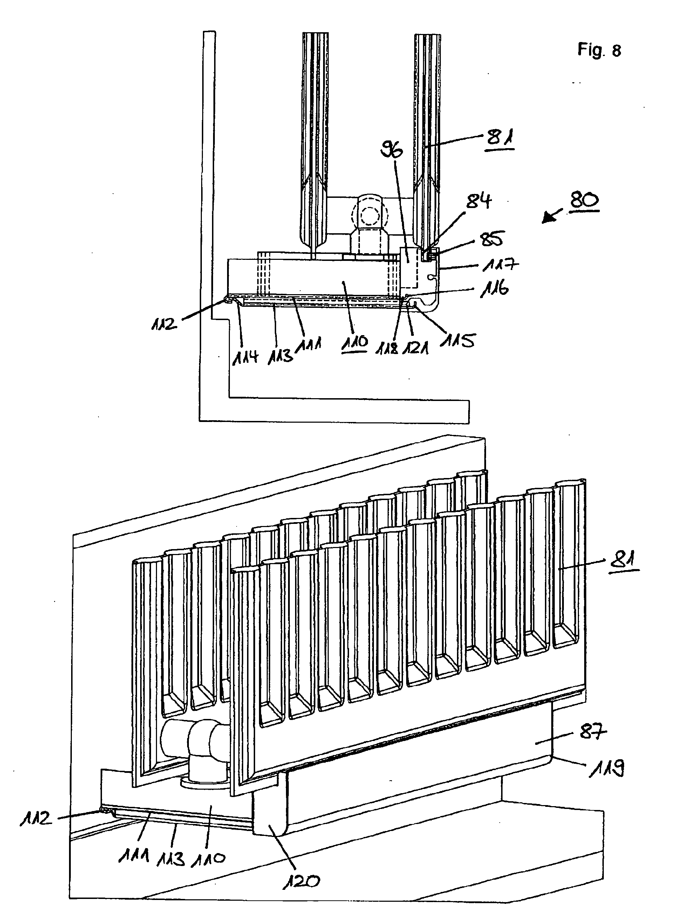

Figur 8 zeigt in einer Seitenansicht und einer perspektivischen Ansicht eine modifizierte Ausführungsform gemäß Figur 6 und 7. Ein Aufnahmegehäuse 110 ist in diesem Fall mit einem Bodenblech 111 ausgestattet, welches im rückwärtigen Bereich eine um 180 Grad ausgebildete Abwinkelung 112 besitzt. Das Aufnahmegehäuse 110 ist ansonsten gemäß Figur 7 aufgebaut und wird über zwei verdeckt liegende Befestigungselemente 116 an der Schweißnaht 84 mithilfe von Madenschrauben 85 einerseits und über die vorhandene abgewlnkelte Nut 118 eines einstückigen, breiten Befestigungselementes 116 gehalten, wobei das Bodenblech 111 im vorderen Bereich eine rechtwinklige Abkantung 115 aufweist, die in der Nut 118 zu liegen kommt. Die Blende 117 ist durch zwei seitliche Abdeckkappen 119 beziehungsweise 120 verschlossen. Das Aufnahmegehäuse 110 ist in diesem Fall mit einem zweiten Bodenblech 113 ausgestattet, welches beispielsweise zur Aufnahme eines Filters oder alternativ als Wasserschale eingesetzt werden kann. Das zweite Bodenblech 113 ist im hinteren Bereich mit einer S-förmigen Verlängerung 114 in die Abwinkelung 112 des ersten Bodenbleches 111 aufgenommen. Im vorderen Bereich besitzt das zweite Bodenblech 113 eine rechtwinklig verlaufende Abkantung 121, welche in einer Nut 122 der Blende 117 gehalten ist.

Aus der perspektivischen Ansicht wird nochmals deutlich, dass die Blende 117 in diesem speziellen Fall nur über einen Teil der Frontansicht ausgebildet ist.

Alternativ besteht aber durchaus auch die Möglichkeit, soweit die Anschlussverschraubungen horizontal verlaufen, die Blende 117 über die gesamte Breite des Plattenheizkörpers 81 auszubilden. Mithilfe der Blende 117 sowie den Endkappen 119, 120 wird das Aufnahmegehäuse 110 vollständig abgedeckt, sodass dieses nach außen nicht mehr in Erscheinung tritt. Innerhalb des Aufnahmegehäuses 110 wird erfindungsgemäß zumindest ein Lüfter korrespondierend zu Durchbrüchen in dem ersten Bodenblech 111 und dem Zwischenraum zwischen den beiden Platten des Plattenheizkörpers 81 montiert, sodass eine wesentlich erhöhte Luftzirkulation erfolgt. In diesem speziellen Fall besteht hierbei die Möglichkeit, mithilfe des zweiten Bodenbleches zusätzlich beispielsweise eine Luftbefeuchtung vorzunehmen, oder mithilfe von Filtermaterialien eine zusätzliche Filterung der Luft vorzunehmen.

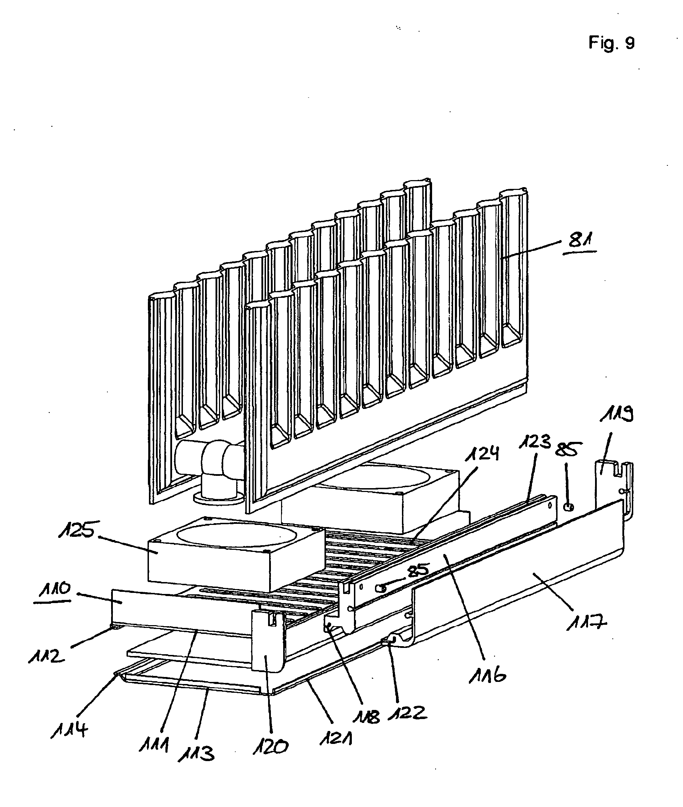

Figur 9 zeigt die aus Figur 8 bekannte Luftzirkulationseinheit 80 in einer perspektivischen Explorationsdarstellung. Im Wesentlichen besteht die Luftzirkulationseinheit 80 aus den beschriebenen Elementen, und zwar eine Blende 117 mit seitlichen Endkappen 119, 120 und einem Befestigungselement 116, welches im Querschnitt ähnlich wie die Befestigungselemente 82 aufgebaut sind, sich aber über eine größere Breite des Plattenheizkörpers erstreckt, sodass eine besonders stabile Befestigung der Luftzirkulationseinheit 80 gewährleistet ist. Die Festlegung des Befestigungselementes 116 erfolgt mithilfe zweier Madenschrauben 85, die eine Verklemmung der Schweißnaht 84 in der im Befestigungselement 116 vorhandenen Nut 123 ermöglichen. Die Luftzirkulationseinheit 80 ist in diesem Fall mit einem ersten Bodenblech 111 und einem zweiten Bodenblech 113 ausgestattet, wobei das Aufnahmegehäuse 110 zur Aufnahme zweier Ventilatoren 115 vorgesehen ist, welche korrespondierend zu vorhandenen Durchbrüchen 124 angeordnet sind und fluchtend zu dem Zwischenraum der beiden Heizplatten des Plattenheizkörpers 81 zu liegen kommen.

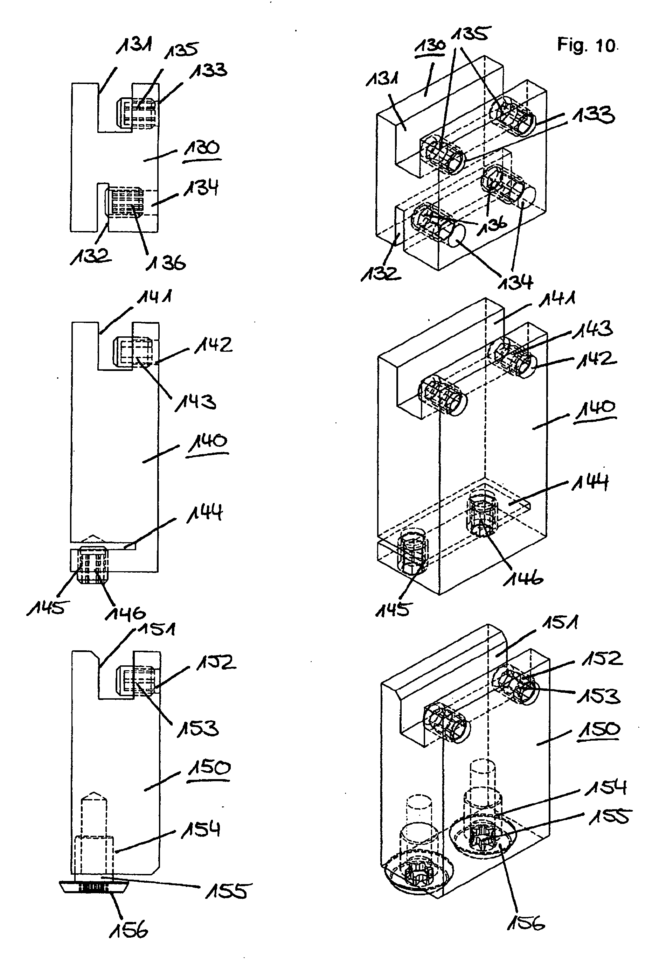

Figur 10 zeigt drei verschiedene Befestigungselemente, die zur Festlegung an einer Schweißnaht eines Plattenheizkörpers verwendet werden können und verschiedene Varianten zur Halterung des Aufnahmegehäuses ermöglichen. Die Befestigungselemente sind jeweils in einer Seitenansicht und einer perspektivischen Ansicht dargestellt. Ein erstes Befestigungselement 130 besitzt eine breite Nut 131 und eine in derselben Ebene liegende schmale Nut 132. Korrespondierend zu den Nuten 131, 132 sind Gewindebohrungen 133, 134 ausgebildet, in die jeweils eine Madenschraube 135, 136 eingedreht ist. Die Madenschrauben 135, 136 dienen zur Verklemmung einerseits der Schweißnaht in der oberen Nut 131 und andererseits des Bodenbleches in der Nut 132.

Ein zweites Befestigungselement 140 weist ebenfalls eine Nut 141 auf, die ähnlich dimensioniert ist, wie bei dem ersten Befestigungselement 130. Auch in diesem Fall ist eine Gewindebohrung 142 ausgebildet, in der eine Madenschraube 143 eingedreht ist. Die Madenschraube 143 dient zur Festlegung des Befestigungselementes 140 an der Schweißnaht des Plattenheizkörpers. Eine zweite Nut 144 ist in diesem Fall rechtwinklig zur ersten Nut 141 angeordnet und dient zur Aufnahme des Bodenbleches, wobei in einer vorhandenen Bohrung 145 ebenfalls eine Madenschraube 146 eingedreht ist und zur Verklemmung des Bodenbleches dient.

Ein drittes Befestigungselement 150 besitzt eine breite Nut 151, zu der korrespondierend eine Gewindebohrung 152 mit einer Madenschraube 153 vorgesehen ist. Auch in diesem Fall dient die Madenschraube 153 zur Verklemmung des Befestigungselementes 150 an der Schweißnaht des Plattenheizkörpers. Anstelle einer zweiten Nut besitzt das Befestigungselement 150 zumindest eine Gewindebohrung 154, in die ein Schraubbolzen 155 mit einem Rändelkopf 156 eingedreht werden kann. Soweit das Bodenblech der Luftzirkulationseinheit 80 hierzu korrespondierende Durchbrüche aufweist, kann mithilfe des Schraubbolzens 155 das Bodenblech an der Unterseite des Befestigungselementes 150 festgeschraubt werden. Sämtliche der vorgenannten Befestigungselemente 130, 140, 150 können in Kombination zu mehreren zur Halterung der Luftzirkulationseinheit 80 eingesetzt werden. Darüber hinaus besteht aber auch die Möglichkeit, dass sich bei besonders stabilen Ausführungen das Befestigungselement über die wesentliche Breite des Plattenheizkörpers erstreckt. Des Weiteren besteht die Möglichkeit, dass die Höhe der Befestigungselemente 130, 140, 150 variiert wird, um gegebenenfalls unterschiedlich hohe Luftzirkulationseinheiten unterhalb des Plattenheizkörpers zu befestigen. Anstelle von Madenschrauben könnten gegebenenfalls auch andere Schraubbolzen eingesetzt werden, oder es kann in vorhandenen Bohrungen ein federbeaufschlagter Klip eingesetzt werden, der in eine vorhandene Vertiefung eingedrückt wird.

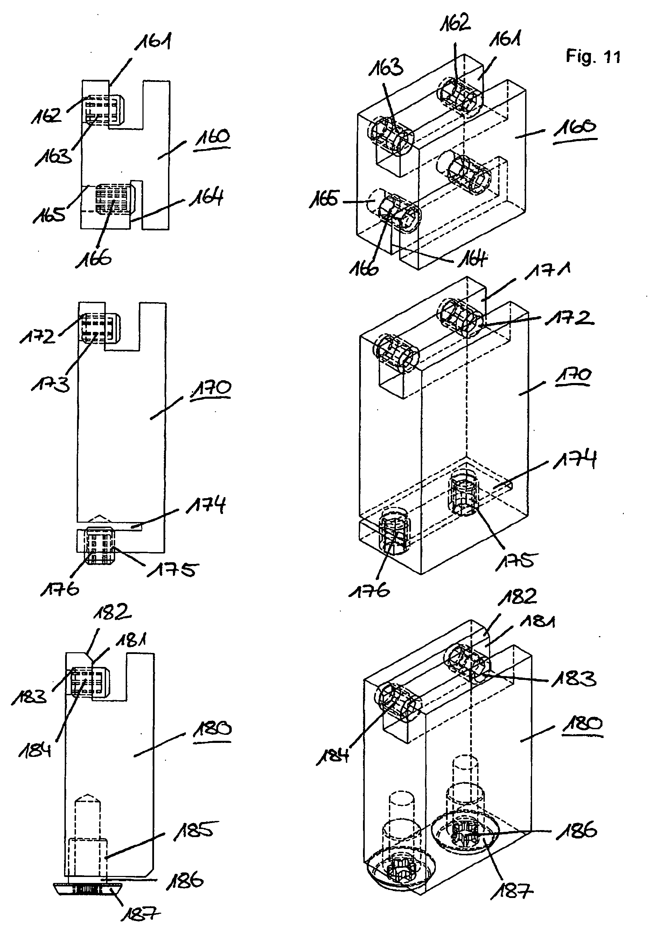

Figur 11 zeigt drei weitere Befestigungselemente in jeweils einer Seitenansicht und perspektivischen Ansicht. Ein erstes Befestigungselement 160 besitzt eine breite Nut 161 mit einer im rückwärtigen Bereich vorhandenen Gewindebohrung 162 und einer Madenschraube 163 sowie eine zweite Nut 164 mit einer ebenfalls im rückwärtigen Bereich liegenden Gewindebohrung 165 und Madenschraube 166. Ein zweites Befestigungselement 170 besitzt eine breite Nut 171 mit einer im rückwärtigen Bereich liegenden Gewindebohrung 172 und einer Madenschraube 173 sowie einer hierzu rechtwinklig angeordneten Nut 174 und einer senkrecht hierzu angeordneten Gewindebohrung 175 mit einer Madenschraube 176. Ein drittes Befestigungselement 180 besitzt wiederum eine breite Nut 181, die zusätzlich mit einer Fase 182 versehen ist und einer im rückwärtigen Bereich vorhandenen Gewindebohrung 183 mit einer Madenschraube 184. In die Unterseite des Befestigungselementes 130 sind mehrere Gewindebohrungen 185 vorgesehen, in welche Schraubbolzen 186 eingedreht werden können, die über einen Rändelkopf 187 verfügen. Sämtliche der vorgenannten Befestigungselemente 160, 170, 180 können zur Halterung an einem Plattenheizkörper mit einem Einklemmen der Schweißnaht verwendet werden. Zur Halterung der Bodenbleche in verschiedenen Ausführungen, beispielsweise bei abgewinkelten Bodenblechen könnte man das Befestigungselement 160 verwenden, während hingegen bei geraden Bodenblechen das Befestigungselement 170 eingesetzt werden kann, und, soweit vorhandene Durchbrüche in den Bodenblechen eingearbeitet sind, könnte eine Verschraubung mit einem Befestigungselement 160 und einem Schraubbolzen 186 erfolgen.

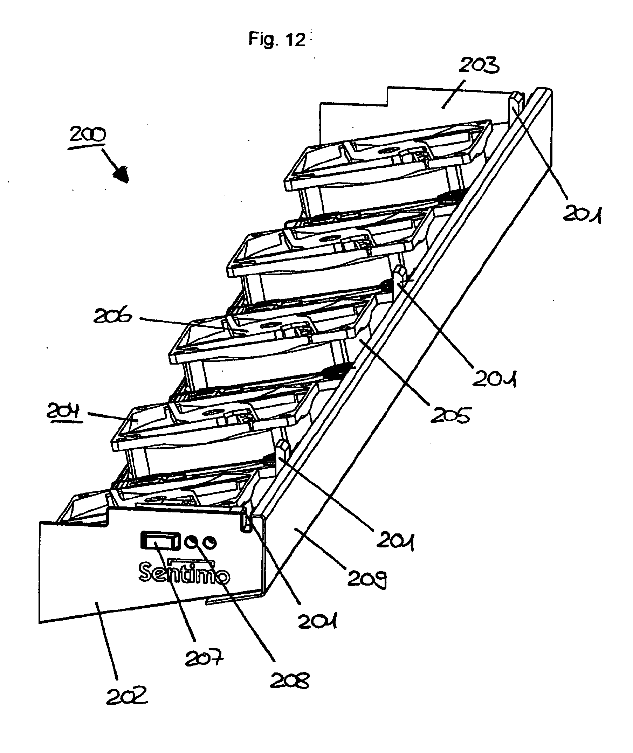

Figur 12 zeigt in einer perspektivischen Ansicht eine Halterung 200 zur Montage an einem nicht dargestellten Plattenheizkörper, welche über Befestigungselemente 201 mit dem Plattenheizkörper verbunden werden kann. Die Halterung 200 besteht, wie aus den nachfolgenden Figuren deutlich wird, aus zwei Befestigungsschienen und endseitigen Seitenblechen 202, 203. Zwischen den Befestigungsschienen sind einzelne Lüfter 204 in äquidistanten Abständen angeordnet, wobei die Lüfter 204 aus einem Lüftergehäuse 205 und einem Lüfterrad 206 mit Antriebsmotor bestehen. Im gezeigten Ausführungsbeispiel sind insgesamt fünf Lüfter 204 montiert, jedoch kann die Anzahl der Lüfter ohne weiteres und je nach Anwendungsfall erhöht oder reduziert werden. Der vordere Bereich der Halterung 200 ist durch eine Blende 209 abgedeckt. Das vordere Seitenblech 202 ist mit einem Schaltelement 207 ausgestattet, um die Lüfter einzuschalten, während über Einstellregler 208 der Einschaltpunkt der Lüfter in Abhängigkeit der Heizkörpertemperatur und die Drehzahl der Lüfter 204 eingestellt werden kann. Das linke Potentiometer 208 dient zur Voreinstellung der Einschalt-Temperatur. Das rechte Potentiometer 208 regelt demgegenüber die Geschwindigkeit der Lüfter 204.

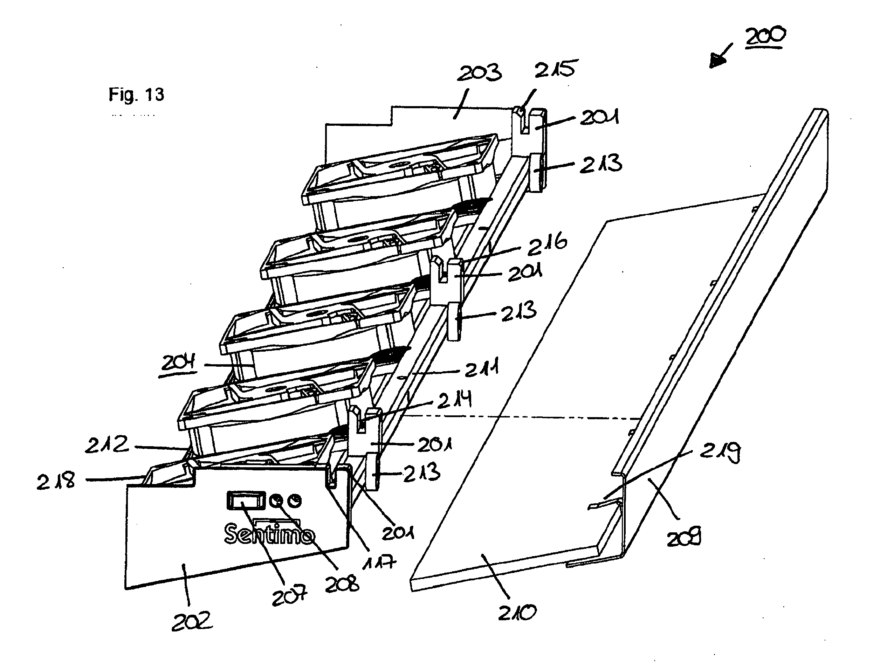

Figur 13 zeigt in einer perspektivischen Ansicht die Halterung 200 gemäß Figur 1 mit abgenommener Blende 209 und Bodenblech 210. Das Bodenblech 210 ist hierbei unmittelbar mit der Blende 209 durch Klemmen 219 verbunden. Durch die Abnahme der Blende 209 wird sichtbar, dass die Halterung 200 aus einer ersten vorderen Befestigungsschiene 211 und einer hinteren zweiten Befestigungsschiene 212 besteht, an denen jeweils kopfseitig die Seitenbleche 202 beziehungsweise 203 befestigt sind. Die Lüfter 204 sind hierbei mithilfe von Schraubbolzen mit den Befestigungsschienen 211, 212 verbunden. Die Blende 209 wird nach dem Aufsetzen durch Magnete 213 gehalten, die mithilfe eines Schraubbolzens an der vorderen ersten Befestigungsschiene 211 angeschraubt sind. Des Weiteren ist aus dieser Ansicht ersichtlich, dass insgesamt vier Befestigungselemente 201 zur Festlegung der Halterung 200 an einem nicht dargestellten Plattenheizkörper vorgesehen sind. Die Befestigungselemente 201 sind mithilfe einer Senkkopfschraube mit der ersten Befestigungsschiene 211 verschraubt und besitzen im oberen Bereich eine Ausnehmung 214, welche zur Aufnahme des unteren Randes des Plattenheizkörpers vorgesehen ist. Zur besseren Zuführung der Befestigungselemente sind diese im Bereich der Ausnehmung 214 mit einer Abschrägung 215 ausgestattet. Des Weiteren befindet sich in den Befestigungselementen 201 senkrecht zur Ausnehmung 214 eine Gewindebohrung 216, in der beispielsweise eine Madenschraube eingedreht werden kann, sodass eine Verklemmung mit dem unteren Rand des Plattenheizkörpers erfolgen kann. Auf diese Weise kann somit die gesamte Halterung 200 fest mit dem unteren Rand des Plattenheizkörpers verbunden werden. Darüber hinaus wird durch die Montage der Lüfter 204 und der Seitenbleche 202, 203 in Verbindung mit der hinteren Befestigungsschiene 212 eine stabile Konstruktion geschaffen, welche als Träger für die Lüfter 204 ausreichend ist. Im gezeigten Ausführungsbeispiel sind die Seitenbleche 202, 203 ebenfalls mit einem Einschnitt 217 oder einer Nut ausgestattet, sodass diese ebenfalls auf den unteren Rand aufgesetzt werden können, während demgegenüber im hinteren Bereich ein Absatz 218 ausgebildet ist, der je nach Bauform des Plattenheizkörpers individuell gestaltet sein kann, beispielsweise wenn eine weitere Heizplatte vorgesehen ist, oder es kann auf den Absatz 218 verzichtet werden und eine verkürzte Bauform der Seitenbleche 202, 203 eingesetzt werden, wenn eine wandbündige Montage bei einem einstufigen Plattenheizkörper gewünscht wird. Die Blende 209 ist mit dem Bodenblech 210 über mehrere über die Länge verteilte Klemmen 219 verbunden, sodass für das Bodenblech 210 ebenfalls ein sicherer Halt gewährleistet ist, wobei das Bodenblech 210 durch zusätzliche Maßnahmen, die in den nachfolgenden Zeichnungsfiguren dargestellt sind, mit der hinteren Befestigungsschiene 212 zusätzlich verbunden werden kann.

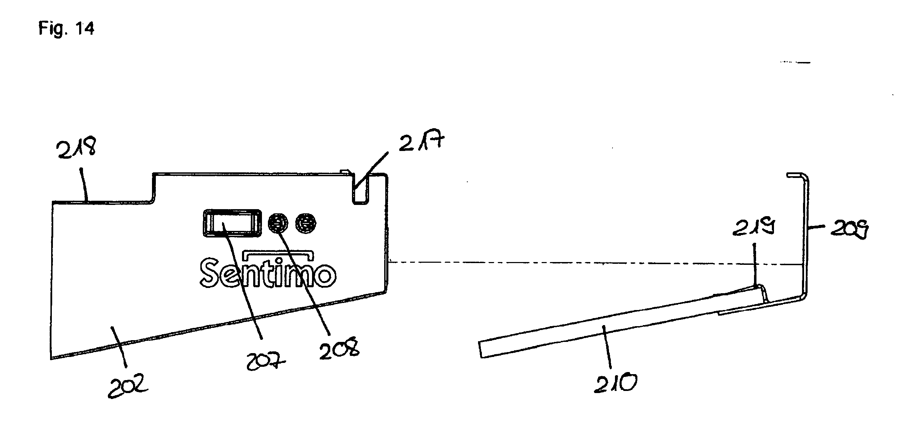

Figur 14 zeigt in einer Seitenansicht die Halterung 200 mit abgenommener Blende 209 und Bodenblech 210, wie sie bereits aus Figur 2 bekannt ist. Aus dieser Darstellung wird aber nochmals ersichtlich, wie das Bodenblech 210 mithilfe der Klemmen 219 in der vorderen Blende 209 gehalten ist. Wie aus den vorhergehenden Zeichnungsfiguren und insbesondere aus der Figur 3 ersichtlich, sind die Seitenbleche 202, 203 im unteren Bereich entsprechend dem Verlauf des Bodenbleches 210 schräg verlaufend ausgebildet. Die hinter den Seitenblechen 202 liegenden Befestigungsschiene 211, 212 befindet sich somit in einer unterschiedlichen Höhe und ermöglicht damit gleichzeitig eine schräge Anordnung der Lüfter 204, wie insbesondere aus Figur 2 ersichtlich.

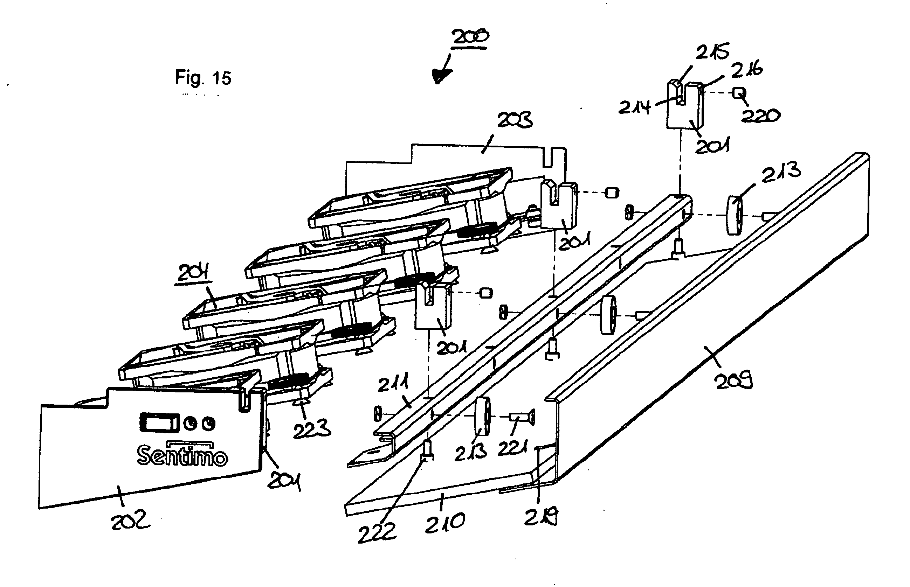

Figur 15 zeigt in einer perspektivischen Explosionsdarstellung die Halterung 200 gemäß Figur 1. Aus dieser Darstellung wird ersichtlich, dass die gesamte Halterung 200 aus der vorderen Befestigungsschiene 211, den Seitenblechen 202, 203 und einer hinteren Befestigungsschiene 212 sowie einer vorderen Blende 209 und einem Bodenblech 210 besteht. Die Magnete 213 werden hierbei mithilfe von Schraubbolzen 221 mit der ersten Befestigungsschiene 211 verschraubt, während mithilfe von Schraubbolzen 222 die Befestigungsschiene 211 mit den Befestigungselementen 201 verschraubt wird, welche zum Aufsetzen auf den unteren Rand des Plattenheizkörpers vorgesehen sind, wobei mithilfe der Madenschrauben 220 eine Verklemmung innerhalb des Schlitzes 214 mit dem unteren Rand der Plattenheizkörper erfolgt. Die einzelnen Lüfter 204 werden mithilfe von Befestigungsschrauben 223 mit der ersten und zweiten Befestigungsschiene 211, 212 verbunden.

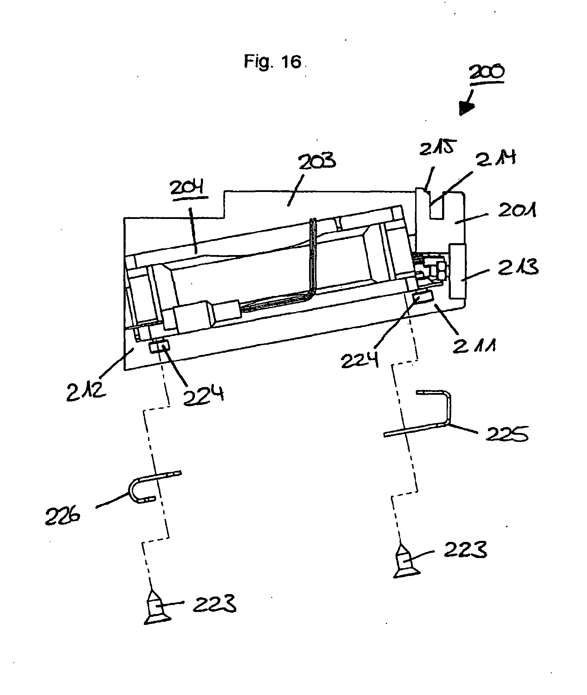

Figur 16 zeigt in einer Seitenansicht die Halterung 200 ohne linkes Seitenblech und vordere Blende 209. Aus dieser Darstellung ist das Befestigungselement 201 mit Schlitz 214 und Abschrägung 215 ersichtlich, sowie die Magnete 213 zur Befestigung der Blende 209. Des Weiteren ist die erste Befestigungsschiene 211 und die zweite Befestigungsschiene 212 ersichtlich, welche zur Verschraubung der Lüfter 204 mithilfe der Schraubbolzen 223 notwendig ist. In der Figur ist in diesem Fall nur das hintere Seitenblech 203 dargestellt, während demgegenüber die vordere Blende zur Verdeutlichung des Sachverhaltes entfernt ist. Unterhalb der Befestigungsschienen 211, 212 sind zwei zusätzliche Haltebleche dargestellt und zwar ein erstes U-förmig gebogenes Halteblech 225 und ein gekrümmtes Halteblech 226, welche mithilfe zweier Rändelschrauben 224 unterhalb der Befestigungsschiene 211, 212 befestigt werden können. Das gekrümmte Halteblech 226 dient hierbei zum Einschub des Bodenbleches 210, während das U-förmig gebogene Halteblech 225 zur Abstützung des Bodenbleches 210 im vorderen Bereich dient.

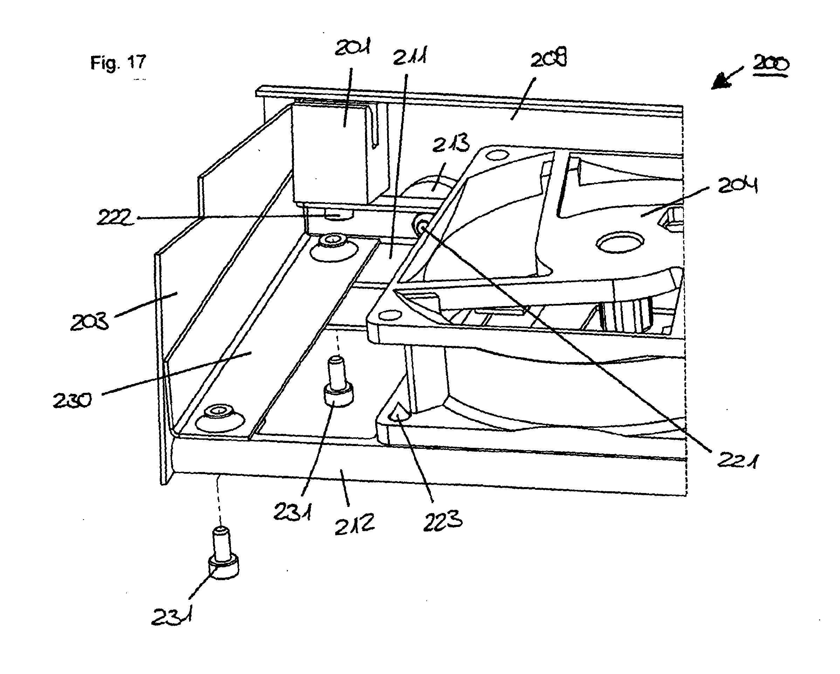

Figur 17 zeigt in einer perspektivischen Teilansicht ebenfalls die Halterung 200. Die Magnete 213 sind mithilfe von Schraubbolzen 221 mit der Befestigungsschiene 211 verschraubt, während demgegenüber die hintere Befestigungsschiene 212 mit der vorderen Befestigungsschiene 211 über ein Winkelprofil 230 in einem vordefinierten Abstand mithilfe von Schraubbolzen 231 verschraubt ist. Das Winkelprofil 230 bestimmt hierbei den Abstand zwischen den beiden Befestigungsschienen 211, 212, und zwar insoweit, dass die Lüfter 204 sicher mithilfe von Schraubbolzen 223 mit beiden Befestigungsschienen 211, 212 verbunden werden können. Das Seitenblech 203 und ebenso das nicht dargestellte Seitenblech 202 sind entweder über Schrauben oder eine Verschweißung mit dem Winkelprofil 230 verbunden.

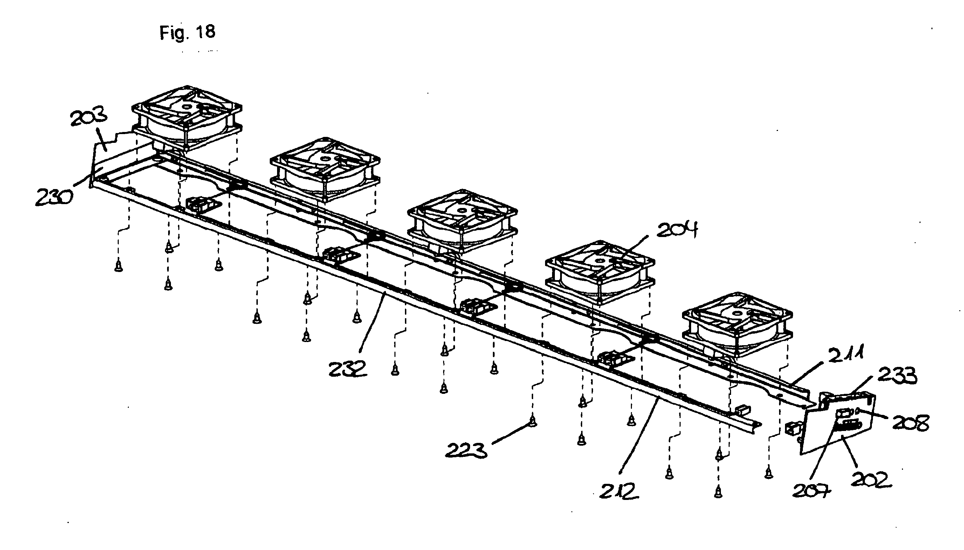

Figur 18 zeigt in einer perspektivischen Explosionsdarstellung die wesentlichen Elemente der Halterung 200, und zwar die vordere Befestigungsschiene 211 und die hintere Befestigungsschiene 212 sowie die Lüfter 204 und deren Befestigungsschraubbolzen 223. Aus dieser Ansicht ist zusätzlich zu erkennen, dass die Befestigungsschiene 211, 212 im Bereich der Position für die Lüfter 204 mit einem abgerundeten Einschnitt versehen sind, damit die Luftdurchtrittsöffnung durch die Befestigungsschienen 211, 212 nicht eingeschränkt wird. Sämtliche Lüfter 204 sind über Verbindungskabel 232 untereinander und mit einer Steuerungselektronik 233 verbunden, die über das in der Seitenbleche 202 befindliche Schaltelement 207 einschaltbar sind und über Einstellregler 208 die Einschalttemperatur und die Drehzahl der Lüfter 204 regelbar ist. Sowohl das Seitenblech 202 als auch das Seitenblech 203 sind über das aus Figur 6 bekannte Winkelprofil 230 zusätzlich mit den Befestigungsschienen 211, 212 verbunden, um eine kompakte stabile Baueinheit herzustellen.

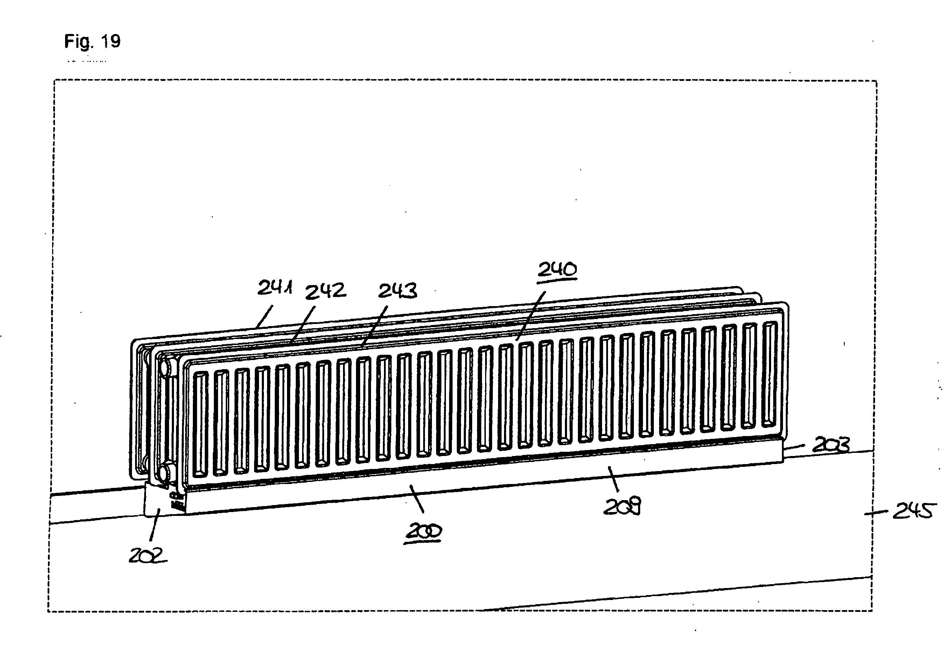

Figur 19 zeigt in einer perspektivischen Ansicht einen Plattenheizkörper 240 mit insgesamt drei Heizplatten 241, 242, 243. Unterhalb des Plattenheizkörpers 240 befindet sich die erfindungsgemäße Halterung 200 für eine Luftzirkulationseinheit in Form der eingesetzten Lüfter 204. Die Halterung 200 ist durch die vordere Blende 209 über die nahezu gesamte Breite des Plattenheizkörpers verdeckt und tritt somit für einen Betrachter kaum in Erscheinung. Entsprechend der Form der Seitenbleche 202, 203 mit einem schrägen Verlauf im unteren Bereich sind die einzelnen Lüfter, wie aus den vorhergehenden Figuren bekannt, unter einem Neigungswinkel zur Horizontalen ausgerichtet, sodass bevorzugt die Luft aus dem Raum vor dem Plattenheizkörper 240 angesaugt werden kann. Die gesamte Montage des Plattenheizkörpers erfolgt hierbei an einer vorhandenen Wand 244 oberhalb des Bodens 245, sodass ein ästhetischer Gesamteindruck entsteht.

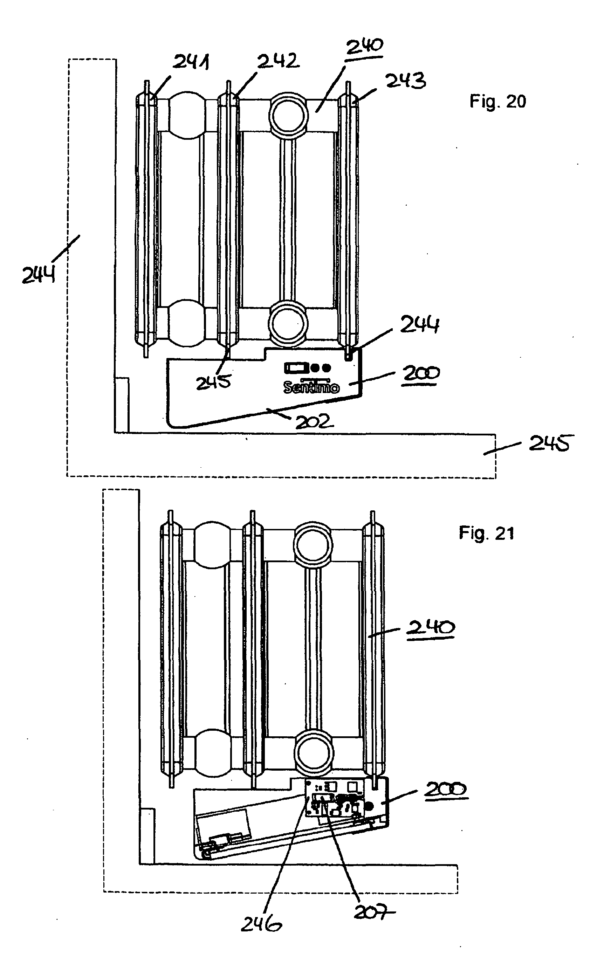

Figur 20 zeigt in einer Seitenansicht den aus Figur 8 bekannten Plattenheizkörper 240 mit seinen Platten 241, 242, 243. Aus dieser Ansicht wird deutlich, dass die Halterung 200 nur an der unteren Kante 244 der vorderen Platte 243 befestigt ist. Der untere Rand 245 der mittleren Platte 242 liegt demgegenüber nur an den Seitenblechen 202, 203 an, während die hintere Heizplatte 243 frei hängend angeordnet ist. Aus dieser Ansicht wird nochmals deutlich, dass die gesamte Anordnung, bestehend aus dem Plattenheizkörper 240 und der Halterung 200 an einer Wand 244 befestigt wird, und zwar in einer Höhe, die knapp über einem Boden 245 liegt, sodass aber in jedem Fall genügend Freiraum zwischen der Halterung 200 und dem Boden 245 besteht, um die Raumluft vor dem Plattenheizkörper 240 anzusaugen.

Figur 21 zeigt die aus Figur 9 bekannte Anordnung des Plattenheizkörpers 240 mit Halterung 200, wobei das vordere Seitenblech entfernt wurde, sodass aus dieser Ansicht die elektronische Baugruppe 246 ersichtlich ist, welche mithilfe des Bedienungselementes 207 ein- und ausgeschaltet werden kann und über die Einstellregler 208 zusätzlich regelbar sind.

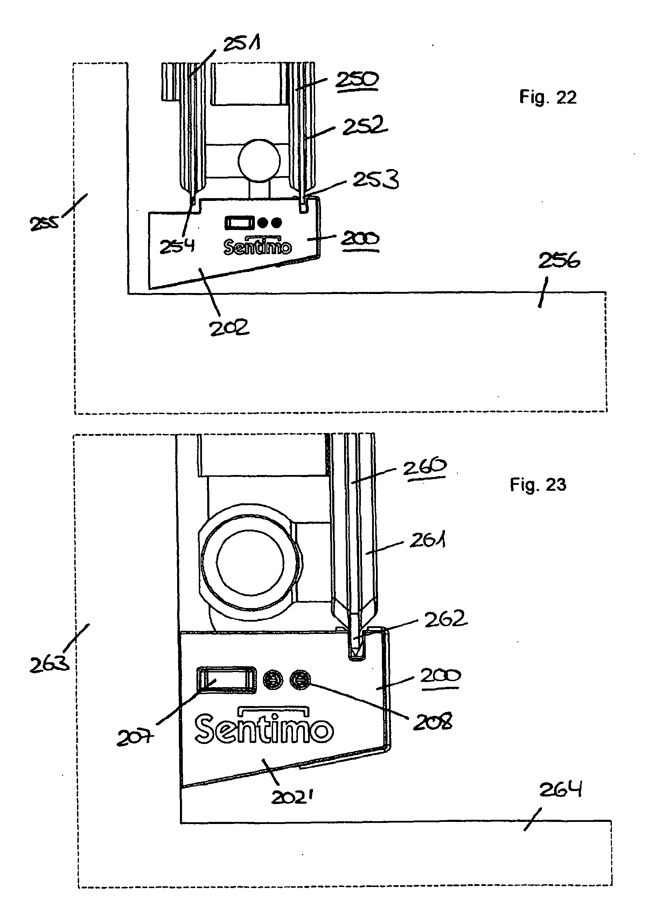

Figur 22 zeigt in einer Seitenansicht eine weitere Ausführungsvariante, bestehend aus einem Plattenheizkörper 250, welcher nur aus einer Platte 251 und einer weiteren Platte 252 besteht. Auch in diesem Fall ist die Halterung 200 nur an dem unteren Rand 253 der vorderen Heizplatte 252 befestigt, während der untere Rand 254 der weiteren Heizplatte 251 frei über der Halterung 200 angeordnet ist. Die Montage des Plattenheizkörpers 250 erfolgt hierbei beabstandet zur Wand 255 und in einer erhöhten Position gegenüber einem Boden 256. Die Halterung 200 mit ihren Seitenblechen 202, 203 reicht hierbei nicht bis zur Wand 255.

Figur 23 zeigt in einer Seitenansicht einen weiteren Plattenheizkörper 260, der in diesem Fall nur aus einer Heizplatte 261 besteht, an deren unterem Rand 262 die Halterung 200' befestigt ist. Bei der Halterung 200' wird in diesem Fall eine verkürzte Bauweise bevorzugt, welche mit ihrer Seitenbleche 202' an der hinteren Wandfläche 263 in erhöhter Position gegenüber einem Boden 264 angeordnet ist. Auch in dem Seitenblech 202' befindet sich ein Schaltelement 207 und Einstellregler 208, um den Betriebszustand anzuzeigen. Die Figuren 11 und 12 zeigen somit zwei unterschiedliche Ausführungsvarianten für die Halterung 200, 200', wie sie unter einem Plattenheizkörper mit einer oder zwei Platten montiert werden kann.

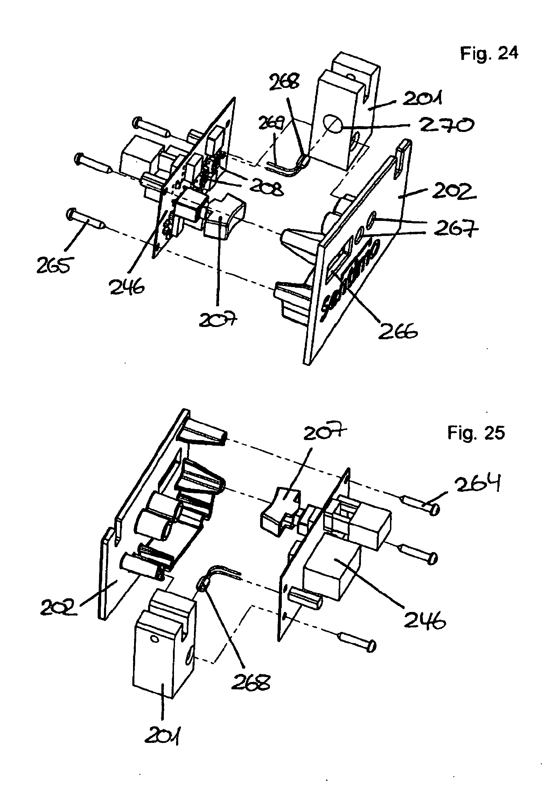

Figur 24 zeigt in einer perspektivischen Explosionsdarstellung das Seitenblech 202 und hiervon beabstandet das Befestigungselement 201 sowie die elektronische Baugruppe 246, welche über Schraubbolzen 265 mit dem Seitenblech 202 verschraubt wird, und zwar insoweit, dass das Schaltelement 207 durch einen Durchbruch 266 des Seitenbleches 202 nach außen hervorsteht, während demgegenüber die Einstellregler 208 durch zwei vorhandene Bohrungen 267 nach außen ragen. Zur Steuerung unterschiedlicher Betriebsmodi, um beispielsweise den Einschaltzeitpunkt der Lüfter in Abhängigkeit der vorhandenen Temperatur des Plattenheizkörpers zu regulieren, ist ein Temperatursensor 268 vorgesehen, welcher über Verbindungsleitungen 269 mit der Baugruppe 246 verbunden ist und zusätzlich in thermischem Kontakt mit dem Befestigungselement 201 steht. Hierzu besitzt das Befestigungselement eine Bohrung 270, in die das Sensorelement 268 eingeführt und befestigt, vorzugsweise mit einem elastischen wärmeleitenden Material eingeklebt ist.

Figur 25 zeigt ebenfalls in einer perspektivischen Explosionsdarstellung die Anordnung des Seitenbleches 202 mit der elektronischen Baugruppe 246 aus einem hinteren Blickwinkel gemäß Figur 13.

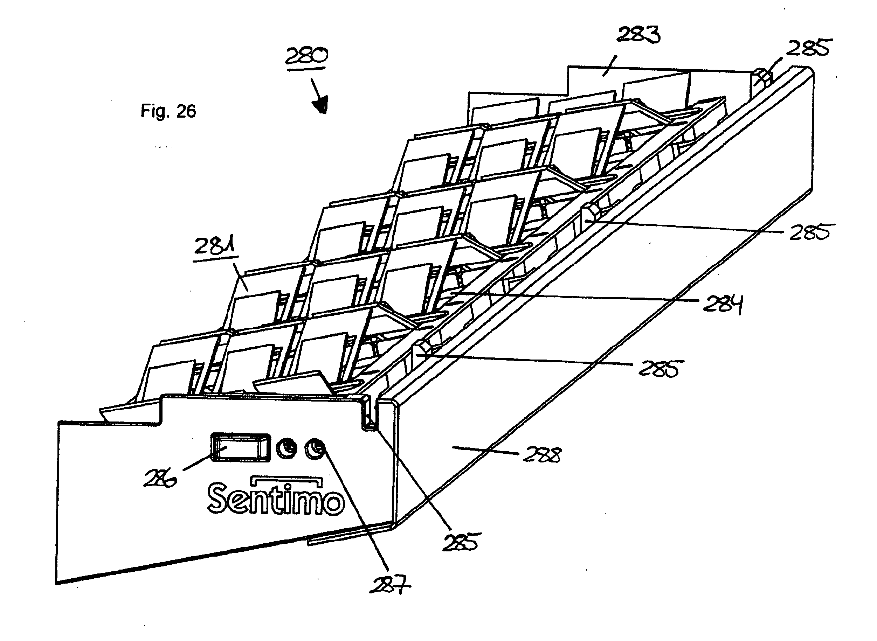

Figur 26 zeigt in einer perspektivischen Ansicht eine Halterung 280 zur Montage an einen nicht dargestellten Plattenheizkörper. Die Halterung 280 entspricht im Wesentlichen der Ausführungsform gemäß Figur 1, wobei zusätzlich oberhalb der Lüfter 284 ein Luftleitblech 281 montiert ist. Ansonsten ist die Halterung 280 mit der Ausführungsform gemäß Figur 1 identisch, wobei in diesem Fall nur vier Lüfter 284 montiert sind. Die Halterung 280 besteht ebenfalls, wie aus den Figuren 16 und 17 nochmals deutlich wird, aus zwei Befestigungsschienen und endseitigen Seitenblechen 282, 283. Zwischen den Befestigungsschienen sind einzelne Lüfter 284 in äquidistanten Abschnitten angeordnet, wobei die Lüfter 284 aus einem Lüftergehäuse und einem Lüfterrad mit Antriebsmotor bestehen. Im gezeigten Ausführungsbeispiel sind insgesamt vier Lüfter 284 montiert, jedoch kann die Anzahl der Lüfter 204 ohne Weiteres und je nach Anwendungsfall erhöht oder reduziert werden. Das vordere Seitenblech 280 ist mit einem Schaltelement 286 ausgestattet, um die Lüfter 284 einzuschalten, während in den vorhandenen Vertiefungen die Einstellregler 208 angeordnet sind. Der linke Einstellregler 208 ist zur Voreinstellung der Einschalttemperatur vorgesehen, beispielsweise zwischen 22 und 38°C. Mit dem rechten Einstellregler 208 kann die Geschwindigkeit der Lüfter eingestellt werden, sodass der Luftstrom gedrosselt werden kann.

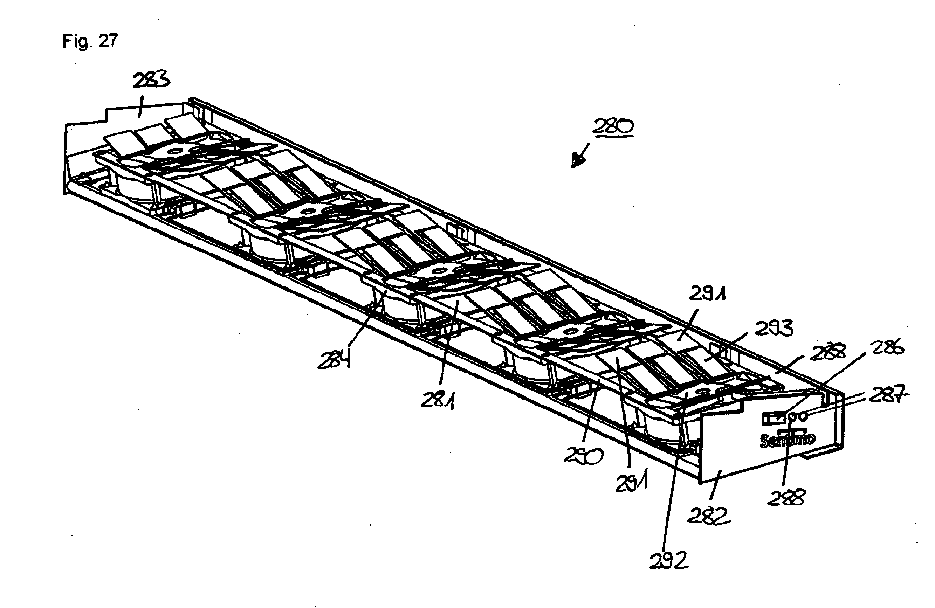

Figur 27 zeigt in einer perspektivischen rückwärtigen Ansicht die Halterung 280 gemäß Figur 15. Aus dieser Ansicht wird deutlich, dass oberhalb der Lüfter 284 ein Luftleitblech 281 angeordnet ist. Das Luftleitblech 281 besteht aus einem umlaufenden Rahmen 290, der V-förmig nach oben ausgerichtete Blechstreifen 291 aufweist. Die Blechstreifen 291 sind jeweils über einem Lüfter 284 mit einer Basis 292 angeordnet und werden vorzugsweise aus einem Vollmaterial ausgestanzt. Die Befestigung des Luftleitbleches erfolgt hierbei mit der Basis 292 unmittelbar über dem Zentrum des Lüfters 284, sodass die von dem Lüfter 284 ausgehende Luftströmung über die Blechstreifen 291 seitlich verteilt wird. Hierdurch wird erreicht, dass der nicht dargestellte Plattenheizkörper einen gleichmäßigen Luftstrom von unten erfährt. Im gezeigten Ausführungsbeispiel sind die einzelnen Blechstreifen 291 unter einem Winkel von annähernd 10 bis 15 Grad angeordnet und weisen einen zweiten Blechstreifen 293 auf. Der zweite Blechstreifen 293 wird hierbei unmittelbar aus dem ersten Blechstreifen 291 ausgestanzt und weist einen von diesem abweichenden Aufrichtungswinkel auf. Somit kann die von dem Lüfter 284 erzeugte Luft entlang des ersten Blechstreifens 291 und des zweiten Blechstreifens 293 nach oben abgeleitet werden, um eine gleichmäßige Luftströmung zwischen zwei Konvektorplatten des Plattenheizkörpers zu gewährleisten. Die Montage des Luftleitbleches kann hierbei über Befestigungsschrauben in der Halterung 280 erfolgen, oder es können die Befestigungsschrauben zur Festlegung der Lüfter 284 verwendet werden.

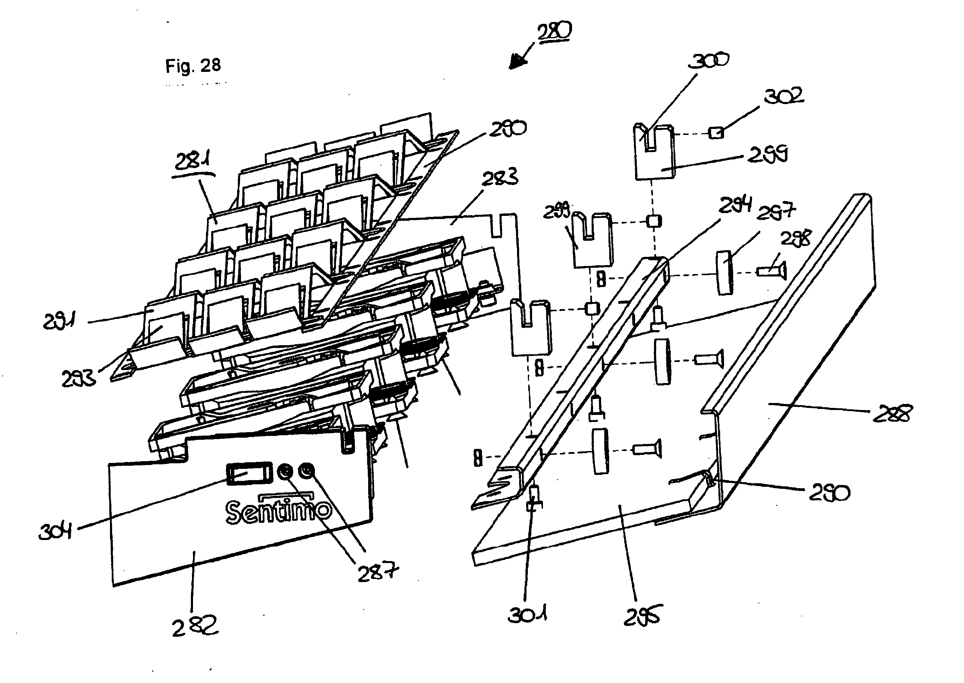

Figur 28 zeigt in einer perspektivischen Explosionsdarstellung die Halterung 280 gemäß Figur 15. Durch die Abnahme der Blende 288 wird sichtbar, dass die Halterung 280 aus einer ersten vorderen Befestigungsschiene 294 besteht, während die hintere Befestigungsschiene aus dieser Darstellung nicht ersichtlich ist. Ein Bodenblech 295 ist durch Klemmen 296 mit der Blende 288 verbunden, wobei die Blende 288 über die Magnete 297 gehalten wird und die Magnete 297 mithilfe von Befestigungsschrauben 298 mit der Befestigungsschiene 294 verschraubt werden. Befestigungselemente 299 mit einer Aussparung 300 werden einerseits über Befestigungsschrauben 301 mit der Befestigungsschiene 294 verbunden und andererseits mithilfe von Madenschrauben 302 an dem unteren Rand des Plattenheizkörpers angeschraubt.

Die Befestigungsschiene 294 dient gleichzeitig zur Halterung der Lüfter 284, in diesem Fall vier Lüfter, die unmittelbar mit der Befestigungsschiene 294 mithilfe von Schrauben 303 verschraubt werden. Die Befestigungselemente 299 sind in diesem Fall sechsfach vorhanden, wobei die beiden randseitigen Befestigungselemente 299 unmittelbar mit den Seltenblechen 282, 283 verbunden sind. Hinter dem Seitenblech 284 befindet sich die Elektronik, welche zur Steuerung der Lüfter 284 eingesetzt wird, wobei mithilfe eines Schaltelementes 304 die Steuerung ein- oder ausgeschaltet werden kann, während in zwei Bohrungen 287 Einstellregler 208 einliegen, mit welchen die Einschaltpunkte der Lüfter 284 eingestellt werden. Der linke Einstellregler 208 dient zur Einstellung des Temperaturschaltpunktes, wann die Lüfter in Betrieb gehen sollen, während der rechte Einstellregler 208 die Geschwindigkeit der Lüfter 284 regelt. Oberhalb der Lüfter 284 ist das Luftleitblech 281 angeordnet, welches mithilfe der Befestigungsschrauben für die Lüfter 284 ebenfalls mit der vorderen Befestigungsschiene 294, aber ebenso mit der hinteren Befestigungsschiene verschraubt werden kann. Das Luftleitblech 281 besteht aus einem Rahmen 290, in den einzelne Blechstreifen 291, 293 ausgestanzt wurden, wobei die Blechstreifen 291, 293 unter verschiedenen Winkeln V-förmig nach oben hervorstehen, um somit eine gleichmäßige Luftströmung zu erzeugen. Die zweiten Blechstreifen 293 sind hierbei unmittelbar aus den ersten Blechstreifen 291 ausgestanzt.

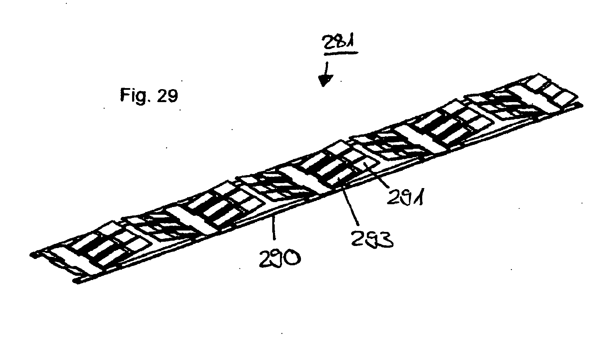

Figur 29 zeigt in einer perspektivischen Darstellung das Luftleitblech 281, wie es bereits aus den Figuren 15 bis 17 bekannt ist. Aus dieser Einzeldarstellung wird nochmals sichtbar, dass das Luftleitblech 281 aus einem umlaufenden Rahmen 290 besteht und einzelne Blechstreifen 291, 293 ausgestanzt wurden, die V-förmig angeordnet unterschiedliche Neigungswinkel aufweisen, sodass eine gleichmäßige Luftströmung zwischen den Konvektorplatten des Plattenheizkörpers erzielt werden kann.

### Bezugszeichenliste:

- 1: Luftzirkulationseinheit
- 2: Plattenheizkörper
- 3: Befestigungselement
- 4: Aufnahmegehäuse
- 5: Wand
- 6: Fußboden
- 7: Fußbodenleiste
- 8: Platte
- 9: Platte
- 10: Rohrelement
- 11: Anschlussverschraubung
- 12: Schweißnaht
- 13: Halteblech
- 14: Bodenblech
- 15: Abwinkelung
- 20: Luftzirkulationseinheit
- 21: Befestigungselement
- 22: Befestigungselement
- 23: Plattenheizkörper
- 24: Schweißnaht
- 25: Platte
- 26: Platte
- 27: Rohrelement
- 28: Anschlussverschraubung
- 29: Aufnahmegehäuse
- 30: Bodenblech
- 31: Seitenwandung
- 32: Schlitz
- 33: Schlitz
- 34: Schraubbolzen
- 35: Schraubbolzen
- 40: Luftzirkulationseinheit
- 41: Befestigungselement
- 42: Aufnahmegehäuse
- 43: Plattenheizkörper
- 44: Platte
- 45: Platte
- 46: Rohrelement
- 47: Anschlussverschraubung
- 48: Nut
- 49: Schweißnaht
- 50: Madenschraube
- 51: Wand
- 52: Fußleiste
- 53: Boden
- 54: Bodenblech
- 55: Schraubbolzen
- 56: Gewindebohrung
- 60: Luftzirkulationseinheit
- 61: Plattenheizkörper
- 62: Platte
- 63: Platte
- 64: Rohrelement
- 65: Anschlussverschraubung
- 66: Aufnahmegehäuse
- 67: Befestigungselement
- 68: Schweißnaht
- 69: Nut
- 70: Madenschraube
- 71: Ausnehmung
- 72: Blende
- 73: Verdickung
- 74: Gewindebolzen
- 75: Bodenblech
- 76: Abwlnkelung
- 77: Wand
- 78: Boden
- 80: Luftzirkulationseinheit
- 81: Plattenheizkörper
- 82: Befestigungselement
- 83: Nut
- 84: Schweißnaht
- 85: Madenschraube
- 86: Ausnehmung
- 87: Blende
- 88: Verdickung
- 89: Verlängerung
- 90: Erhöhung
- 91: Nut
- 92: Bodenblech
- 93: Aufnahmegehäuse
- 94: Abkantung
- 95: Endkappe
- 96: Endkappe
- 97: Nut
- 98: Ende
- 99: Vertiefung
- 101: Ausformung
- 110: Aufnahmegehäuse
- 111: Bodenblech
- 112: Abwinkelung
- 113: Bodenblech
- 114: Verlängerung
- 115: Abkantung
- 116: Befestigungselement
- 117: Blende
- 118: Nut
- 119: Abdeckkappe
- 120: Abdeckkappe
- 121: Abkantung
- 122: Nut
- 123: Nut
- 124: Durchbruch
- 125: Lüfter
- 130: Befestigungselement
- 131: Nut
- 132: Nut
- 133: Gewindebohrung
- 134: Gewindebohrung
- 135: Madenschraube
- 136: Madenschraube
- 140: Befestigungselement
- 141: Nut
- 142: Gewindebohrung
- 143: Madenschraube
- 144: Nut
- 145: Bohrung
- 146: Madenschraube
- 150: Befestigungselement
- 151: Nut
- 152: Gewindebohrung
- 153: Madenschraube
- 154: Gewindebohrung
- 155: Schraubbolzen
- 156: Rändelkopf
- 160: Befestigungselement
- 161: Nut
- 162: Gewindebohrung
- 163: Madenschraube
- 164: Nut
- 165: Gewindebohrung
- 166: Madenschraube
- 170: Befestigungselement
- 171: Nut
- 172: Gewindebohrung
- 173: Madenschraube
- 174: Nut
- 175: Gewindebohrung
- 176: Madenschraube
- 180: Befestigungselement
- 181: Nut
- 182: Fase
- 183: Gewindebohrung
- 184: Madenschraube
- 185: Gewindebohrung
- 186: Schraubbolzen
- 187: Rändelkopf
- 200: Halterung
- 200': Halterung
- 201: Befestigungselement
- 202: Seitenblech
- 202': Seitenblech
- 203: Seitenblech
- 204: Lüfter
- 205: Lüftergehäuse
- 206: Lüfterrad
- 207: Schaltelement
- 208: Einstellregler
- 209: Blende
- 210: Bodenblech
- 211: Befestigungsschiene
- 212: Befestigungsschiene
- 213: Magnet
- 214: Ausnehmung
- 215: Abschrägung
- 216: Gewindebohrung
- 217: Einschnitt /Nut
- 218: Absatz
- 219: Klemme
- 220: Madenschraube
- 221: Schraubbolzen
- 222: Schraubbolzen
- 223: Befestigungsschraube
- 224: Rändelschraube
- 225: Halteblech
- 226: Halteblech
- 230: Winkelprofil
- 232: Verbindungskabel
- 233: Steuerungselektronik
- 240: Plattenheizkörper
- 241: Heizplatte
- 242: Heizplatte
- 243: Heizplatte
- 244: Wand
- 245: Boden
- 246: Baugruppe
- 250: Plattenheizkörper
- 251: Platte
- 252: Platte
- 253: Rand
- 254: Rand
- 255: Wand
- 256: Boden
- 260: Plattenheizkörper
- 261: Heizplatte
- 262: Rand
- 263: Wandfläche
- 264: Bodenfläche
- 265: Schraubbolzen
- 266: Durchbruch
- 267: Bohrung
- 268: Temperatursensor
- 269: Verbindungsleitung
- 270: Bohrung
- 280: Halterung
- 281: Luftleitblech
- 282: Seitenblech
- 283: Seitenblech
- 284: Lüfter
- 286: Schaltelement
- 288: Blende
- 290: Rahmen
- 291: Blechstreifen
- 292: Basis
- 293: Blechstreifen
- 294: Befestigungsschiene
- 299: Befestigungselement
- 303: Schraube
- 304: Schaltelement

## Patentansprüche

1. Halterung für eine Luftzirkulationseinheit (1, 20, 40, 60, 80) zur Montage an einem Plattenheizkörper (2, 23, 43, 61, 81, 240, 250, 260), umfassend zumindest ein Befestigungselement (3, 21, 22, 41, 67, 82, 116, 130, 140, 150, 160, 170, 180, 201, 299) und ein Aufnahmegehäuse (4, 29, 42, 66, 93,110) oder einen Montagerahmen,
**dadurch gekennzeichnet,**
**dass** das wenigstens eine Befestigungselement (3, 21, 22, 41, 67, 82, 116, 130, 140, 150, 160, 170, 180, 201, 299) einenends zur Montage an einer unteren Schweißnaht (12, 24, 49, 68, 84) eines Plattenheizkörpers (2, 23, 43, 61, 81, 240, 250, 260) vorgesehen ist und anderenends mittelbar oder unmittelbar mit dem Aufnahmegehäuse (4, 29, 42, 66, 93, 110) oder dem Montagerahmen verbunden ist, wobei das Befestigungselement (3, 21, 22, 41, 67, 82, 116, 130, 140, 150, 160, 170, 180, 201, 299) eine erste Nut (48, 69, 83, 123, 131, 141, 151, 161, 171, 181) zur Aufnahme der Schweißnaht (12, 24, 68, 84) aufweist und durch eine Schraube (50, 70, 85, 135, 143, 163, 173, 184, 220) festlegbar ist.

2. Halterung nach Anspruch 1,
**dadurch gekennzeichnet,**
**dass** mehrere Befestigungselemente (3, 21, 22, 41, 67, 82, 116, 130, 140, 150, 160, 170, 180, 201, 299) über die Breite der Schweißnaht (12, 24, 49, 68, 84) des Plattenheizkörpers (2, 23, 43, 61, 81, 240, 250, 260) verteilt angeordnet sind oder dass ein einzelnes Befestigungselement (3, 21, 22, 41, 67, 82, 116, 130, 140, 150, 160, 170, 180, 201, 299) in annähernder Breite des Plattenheizkörpers (2, 23, 43, 61, 81, 240, 250, 260) an der Schweißnaht (12, 24, 49, 68, 84) befestigt ist.

3. Halterung nach Anspruch 1 oder 2,
**dadurch gekennzeichnet,**
**dass** das Befestigungselement (3, 21, 22, 41, 67, 82, 116, 130, 140, 150, 160, 170, 180, 201, 299) mit einem Abschlussblech zur seitlichen Montage ausgestattet ist.

4. Halterung nach Anspruch 1, 2 oder 3,
**dadurch gekennzeichnet,**
**dass** das Befestigungselement (3, 21, 22, 41, 67, 82, 116, 130, 140, 150, 160, 170, 180, 201, 299) eine erste breite Nut (48, 69, 83, 123, 131, 141, 151, 161, 171, 181) zur Aufnahme der Schweißnaht (12, 24, 49, 68, 84) und hierzu senkrecht angeordnete Durchbrüche (124, 266) in Höhe der Nut (48, 69, 83, 123, 131, 141, 151, 161, 171, 181) zur Aufnahme eines Arretierelementes aufweist.

5. Halterung nach Anspruch 4,
**dadurch gekennzeichnet,**
**dass** das Befestigungselement (3, 21, 22, 41, 67, 82, 116, 130, 140, 150, 160, 170, 180, 201, 299) eine zweite schmale Nut (132, 144, 164, 174) in der Ebene der ersten Nut (48, 69, 83, 123, 131, 141, 151, 161, 171, 181) oder rechtwinklig zu dieser Ebene aufweist oder dass das Befestigungselement (3, 21, 22, 41, 67, 82, 116, 130, 140, 150, 160, 170, 180, 201, 299) mehrere Gewindebohrungen (56, 133, 134, 142, 152, 154, 162, 165, 172, 175, 183, 185, 216) zur Aufnahme eines Arretierelementes senkrecht zur Ebene der ersten Nut (48, 69, 83, 123, 131, 141, 151, 161, 171, 181) oder in einer parallel verschobenen Ebene zur ersten Nut (48, 69, 83, 123, 131, 141, 151, 161, 171, 181) aufweist.

6. Halterung nach Anspruch 5,
**dadurch gekennzeichnet,**
**dass** die zweite Nut (132, 144, 164, 174) zur Aufnahme einer Seitenwand oder eines Bodens (53, 78, 245, 256) des Aufnahmegehäuses (4, 29, 42, 66, 93, 110) oder zur Aufnahme einer Befestigungsschiene (211, 299) des Montagerahmens oder eines Bodenbleches (14, 30, 75, 92, 111, 113, 210) vorgesehen ist.

7. Halterung nach einem der Ansprüche 1 bis 6,
**dadurch gekennzeichnet,**
**dass** die Befestigungselemente (3, 21, 22, 41, 67, 82, 116, 130, 140, 150, 160, 170, 180, 201, 299) und das Aufnahmegehäuse (4, 29, 42, 66, 93, 110) oder der Montagerahmen durch eine Blende (72, 87, 117, 209, 288), welche annähernd über die gesamte Breite des Plattenheizkörpers (2, 23, 43, 61, 81, 240, 250, 260) ausgebildet ist, verdeckt sind, und/oder dass die Befestigungselemente (3, 21, 22, 41, 67, 82, 116, 130, 140, 150, 160, 170, 180, 201, 299) zur Halterung eines Temperatursensors (268) vorgesehen sind.

8. Halterung nach einem der Ansprüche 6 bis 7,
**dadurch gekennzeichnet,**
**dass** das Bodenblech (14, 30, 75, 92, 111, 113, 210) eine vordere Abkantung (121) aufweist, auf welche eine Blende (72, 87, 117, 209, 288) aufsetzbar ist, oder dass das Bodenblech (14, 30, 54, 75, 92, 111, 113) eine vordere gerade oder gebogen verlaufende Verlängerung aufweist, welche in der zweiten Nut (132, 144, 164, 174) des Befestigungselementes (3, 21, 22, 41, 67, 82, 116, 130, 140, 150, 160, 170, 180, 201, 299) einliegt.

9. Halterung nach einem der Ansprüche 6 bis 8,
**dadurch gekennzeichnet,**
**dass** das Bodenblech (14, 30, 75, 92, 111, 113, 210) unter einem Winkel von 10 bis 30 Grad gegenüber der Horizontalen geneigt ausgerichtet ist, und/oder dass das Bodenblech (14, 30, 75, 92, 111, 113, 210) Luftdurchtrittsöffnungen aufweist.

10. Halterung nach einem der Ansprüche 1 bis 9,
**dadurch gekennzeichnet,**
**dass** der Montagerahmen aus einer ersten und zweiten beabstandeten Befestigungsschiene (211, 212, 294), einem Verbindungsprofil und stirnseitigen Seitenblechen (202, 202', 203) besteht.

11. Halterung nach Anspruch 10,
**dadurch gekennzeichnet,**
**dass** der Montagerahmen flachbauend ausgebildet zur Aufnahme zumindest eines Lüfters (125, 204, 284) vorgesehen ist, welcher zwischen den Platten des Plattenheizkörpers (240, 250, 260) vorzugsweise an den beiden Befestigungsschienen (211, 212, 294) montierbar ist.

12. Halterung nach einem der Ansprüche 9 bis 11,
**dadurch gekennzeichnet,**
**dass** an das oder die Befestigungselement(e) (3, 21, 22, 41, 67, 82, 116, 130, 140, 150, 160, 170, 180, 201, 299) die erste Befestigungsschiene (211, 294) anschraubbar ist, welche über zwei äußere Seitenbleche (202, 202', 203) und ein Verbindungsprofil mit der zweiten Befestigungsschiene (212, 294) verbunden sind, wobei die beiden Befestigungsschienen (211, 212, 294) parallel ausgerichtet sind.

13. Halterung nach einem der Ansprüche 9 bis 12,
**dadurch gekennzeichnet,**
**dass** die zweite Befestigungsschiene (212, 294) mit einem um 120 Grad umgebogenen Halteblech (13, 226) verbunden ist, welches zur Aufnahme des Bodenbleches (14, 30, 75, 92, 111, 113, 210) vorgesehen ist.

14. Halterung nach Anspruch 13,
**dadurch gekennzeichnet,**
**dass** in das Halteblech (13, 226) ein zweites Bodenblech (14, 30, 75, 92, 111, 113, 210) einschiebbar ist, welches zusätzlich über zumindest ein Befestigungselement (3, 21, 22, 41, 67, 82, 116, 130, 140, 150, 160, 170, 180, 201, 299) gehalten ist, wobei das Bodenblech (14, 30, 75, 92, 111, 113, 210) mit Luftdurchtrittsöffnungen zur Aufnahme eines Filtermaterials vorgesehen oder als Wasservorratsschale ausgebildet ist.

15. Halterung nach einem der Ansprüche 7 bis 14,
**dadurch gekennzeichnet,**
**dass** die Blende (72, 87, 117, 209, 288) aus einem vorderen U-förmig gebogenen Blechstreifen und einem an dem Blechstreifen festgelegten Bodenblech (14, 30, 75, 92, 111, 113, 210) besteht.

16. Halterung nach einem der Ansprüche 1 bis 15,
**dadurch gekennzeichnet,**
**dass** die Liftzirkulationseinheit (1, 20, 40, 60, 80) Lüfter (125, 204, 284) beinhaltet, wobei oberhalb der montierten Lüfter (125, 204, 284) ein Luftleitblech (281) angeordnet ist, welches im vorgesehenen Rasterabstand der Lüfter (125, 204, 284) jeweils zwei nach oben abgewinkelte Blechstreifen (291, 293) aufweist, welche zum Teil über dem Lüfter (125, 204, 284) und zum Teil über dem Zwischenraum angeordnet sind.

17. Halterung nach einem der Ansprüche 1 bis 16,
**dadurch gekennzeichnet,**
**dass** zumindest ein Seitenblech (202, 202', 203, 282, 283) zur Aufnahme von Schaltelementen (207, 304) und/oder Einstellreglern (208) vorgesehen ist.

## Claims

1. Holder for an air circulation unit (1, 20, 40, 60, 80) to be mounted to a flat radiator (2, 23, 43, 61, 81, 240, 250, 260), comprising at least one fixing element (3, 21, 22, 41, 67, 82, 116, 130, 140, 150, 160, 170, 180, 201, 299) and one receiving housing (4, 29, 42, 66, 93, 110) or an assembly frame,
**characterized in that**
said at least one fixing element (3, 21, 22, 41, 67, 82, 116, 130, 140, 150, 160, 170, 180, 201, 299) is provided at one end to be mounted to a lower weld seam (12, 24, 49, 68, 84) of a flat radiator (2, 23, 43, 61, 81, 240, 250, 260) and is at the other end directly or indirectly connected to the receiving housing (4, 29, 42, 66, 93, 110) or the assembly frame, the fixing element (3, 21, 22, 41, 67, 82, 116, 130, 140, 150, 160, 170, 180, 201, 299) comprising a first groove (48, 69, 83, 123, 131, 141, 151, 161, 171, 181) for receiving the weld seam (12, 49, 24, 68, 84) and being fixable by a bolt (50, 70, 85, 135, 143, 153, 163, 173, 184, 220).

2. Holder according to claim 1,
**characterized in that**
a plurality of fixing elements (3, 21, 22, 41, 67, 82, 116, 130, 140, 150, 160, 170, 180, 201, 299) is arranged distributed across the width of the weld seam (12, 24, 49, 68, 84) of the flat radiator (2, 23, 43, 61, 81, 240, 250, 260), or that an individual fixing element (3, 21, 22, 41, 67, 82, 116, 130, 140, 150, 160, 170, 180, 201, 299) is fixed approximately over the width of the flat radiator (2, 23, 43, 61, 81, 240, 250, 260) to the weld seam (12, 24, 49, 68, 84).

3. Holder according to claim 1 or 2,
**characterized in that**
said fixing element (3, 21, 22, 41, 67, 82, 116, 130, 140, 150, 160, 170, 180, 201, 299) is equipped with a terminal plate for lateral assembly.

4. Holder according to claim 1, 2 or 3,
**characterized in that** said fixing element (3, 21, 22, 41, 67, 82, 116, 130, 140, 150, 160, 170, 180, 201, 299) comprises a first broad groove (48, 69, 83, 123, 131, 141, 151, 161, 171, 181) for receiving the weld seam (12, 24, 49, 68, 84) and openings (124, 266) arranged perpendicularly thereto at the level of the groove (48, 69, 83, 123, 131, 141, 151, 161, 171, 181) for receiving a locking element.

5. Holder according to claim 4,
**characterized in that**
said fixing element (3, 21, 22, 41, 67, 82, 116, 130, 140, 150, 160, 170, 180, 201, 299) comprises a second, narrow groove (132, 144, 164, 174) in the plane of said first groove (48, 69, 83, 123, 131, 141, 151, 161, 171, 181) or perpendicularly to said plane, or that said fixing element (3, 21, 22, 41, 67, 82, 116, 130, 140, 150, 160, 170, 180, 201, 299) comprises a plurality of tap holes (56, 133, 134, 142, 152, 154, 162, 165, 172, 175, 183, 185, 216) for receiving a locking element perpendicularly to the plane of said first groove (48, 69, 83, 123, 131, 141, 151, 161, 171, 181), or in a plane shifted in parallel with respect to said first groove (48, 69, 83, 123, 31, 141, 151, 161, 171, 181).

6. Holder according to claim 5,
**characterized in that**
said second groove (132, 144, 164, 174) is provided for receiving a side wall or a bottom (53, 78, 245, 256) of said receiving housing (4, 29, 42, 66, 93, 110) or for receiving a fixing rail (211, 299) of said assembly frame or a bottom plate (14, 30, 75, 92, 111, 113, 210).

7. Holder according to one of claims 1 to 6,
**characterized in that**
said fixing elements (3, 21, 22, 41, 67, 82, 116, 130, 140, 150, 160, 170, 180, 201, 299) and said receiving housing (4, 29, 42, 66, 93, 110) or said assembly frame are covered by a cover (72, 87, 117, 209, 288) which is embodied nearly across the total width of the flat radiator (2, 23, 43, 61, 81, 240, 250, 260), and/or that said fixing elements (3, 21, 22, 41, 67, 82, 116, 130, 140, 150, 160, 170, 180, 201, 299) are provided for holding a temperature sensor (268).

8. Holder according to one of claims 6 to 7,
**characterized in that**
said bottom plate (14, 30, 75, 92, 111, 113, 210) comprises a front chamfer (121) onto which a cover (72, 87, 117, 209, 288) may be placed, or that said bottom plate (14, 30, 54, 75, 92, 111, 113) comprises a front straight or bent elongation which lies within the second groove (132, 144, 164, 174) of the fixing element (3, 21, 22, 41, 67, 82, 116, 130, 140, 150, 160, 170, 180, 201, 299).

9. Holder according to one of claims 6 to 8,
**characterized in that**
said bottom plate (14, 30, 75, 92, 111, 113, 210) is oriented inclined at an angle of 10 to 30 degrees with respect to the horizontal line, and/or that said bottom plate (14, 30, 75, 92, 111, 113, 210) comprises air passage openings.

10. Holder according to one of claims 1 to 9,
**characterized in that**
said assembly frame consists of a first and second spaced apart fixing rails (211, 212, 294), a connection profile and side panels on the face (202, 202', 203).

11. Holder according to claim 10,
**characterized in that**
said assembly frame is provided in a flat construction for receiving at least one fan (125, 204, 284) which is mountable between the plates of said flat radiator (240, 250, 260), preferably at the two fixing rails (211, 212, 294).

12. Holder according to one of claims 9 to 11,
**characterized in that**
said first fixing rail (211, 294) may be screwed to said fixing element(s) (3, 21, 22, 41, 67, 82, 116, 130, 140, 150, 160, 170, 180, 201, 299) which are connected to said second fixing rail (212, 294) via two outer side panels (202, 202', 203) and a connection profile, said two fixing rails (211, 212, 294) being oriented in parallel.

13. Holder according to one of claims 9 to 12,
**characterized in that**
said second fixing rail (212, 294) is connected to a mounting plate (13, 226) bent by 120 degrees and provided for receiving the bottom plate (14, 30, 75, 92, 111, 113, 210).

14. Holder according to claim 13,
**characterized in that**
a second bottom plate (14, 30, 75, 92, 111, 113, 210) is insertable into said mounting plate (13, 226) which is additionally retained by at least one fixing element (3, 21, 22, 41, 67, 82, 116, 130, 140, 150, 160, 170, 180, 201, 299), said bottom plate (14, 30, 75, 92, 111, 113, 210) being provided with air passage openings for receiving a filter material or being embodied as a water storage basin.

15. Holder according to one of claims 7 to 14,
**characterized in that**
said cover (72, 87, 117, 209, 288) consists of a front sheet metal strip bent in a U-shape and a bottom plate (14, 30, 75, 92, 111, 113, 210) fixed at the sheet metal strip.

16. Holder according to one of claims 1 to 15,
**characterized in that**
said air circulation unit (1, 20, 40, 60, 80) includes fans (125, 204, 284), where an air guide plate (281) is arranged above the mounted fans (125, 204, 284) which comprises at the provided grid spacing of the fans (125, 204, 284) each two sheet metal strips (291, 293) bent upwards which are partially disposed above the fan (125, 204, 284) and partially above the space.

17. Holder according to one of claims 1 to 16,
**characterized in that**
at least one side panel (202, 202', 203, 282, 283) is provided for receiving switching elements (207, 304) and/or adjustment controls (208).

## Revendications

1. Support pour une unité de circulation d'air (1, 20, 40, 60, 80) pour un montage sur un radiateur à panneaux (2, 23, 43, 61, 81, 240, 250, 260), comprenant au moins un élément de fixation (3, 21, 22, 41, 67, 82, 116, 130, 140, 150, 160, 170, 180, 201, 299) et un boîtier de réception (4, 29, 42, 66, 93, 110) ou un cadre de montage,
**caractérisé en ce que**
l'au moins un élément de fixation (3, 21, 22, 41, 67, 82, 116, 130, 140, 150, 160, 170, 180, 201, 299) est prévu à une extrémité pour un montage sur une soudure inférieure (12, 24, 49, 68, 84) d'un radiateur à panneaux (2, 23, 43, 61, 81, 240, 250, 260) et est relié à l'autre extrémit directement ou indirectement au boîtier de réception (4, 29, 42, 66, 93, 110) ou au cadre de montage, l'élément de fixation (3, 21, 22, 41, 67, 82, 116, 130, 140, 150, 160, 170, 180, 201, 299) présentant une première rainure (48, 69, 83, 123, 131, 141, 151, 161, 171, 181) pour recevoir la soudure (12, 24, 49, 68, 84) et pouvant être fixé à l'aide d'une vis (50, 70, 85, 135, 143, 153, 163, 173, 184, 220).

2. Support selon la revendication 1,
**caractérisé en ce que**
plusieurs éléments de fixation (3, 21, 22, 41, 67, 82, 116, 130, 140, 150, 160, 170, 180, 201, 299) sont répartis sur la largeur de la soudure (12, 24, 49, 68, 84) du radiateur à panneaux (2, 23, 43, 61, 81, 240, 250, 260) ou **en ce qu'**un seul élément de fixation (3, 21, 22, 41, 67, 82, 116, 130, 140, 150, 160, 170, 180, 201, 299) est fixé à la soudure (12, 24, 49, 68, 84) sur la largeur approximative du radiateur à panneaux (2, 23, 43, 61, 81, 240, 250, 260).

3. Support selon la revendication 1 ou 2,
**caractérisé en ce que**
l'élément de fixation (3, 21, 22, 41, 67, 82, 116, 130, 140, 150, 160, 170, 180, 201, 299) est muni d'une tôle maîtresse pour le montage latéral.

4. Support selon la revendication 1, 2 ou 3,
**caractérisé en ce que**
l'élément de fixation (3, 21, 22, 41, 67, 82, 116, 130, 140, 150, 160, 170, 180, 201, 299) présente une première rainure large (48, 69, 83, 123, 131, 141, 151, 161, 171, 181) pour recevoir la soudure (12, 24, 49, 68, 84) et des percées disposées à cet effet verticalement (124, 266) à hauteur de la rainure (48, 69, 83, 123, 131, 141, 151, 161, 171, 181) pour recevoir un élément d'arrêt.

5. Support selon la revendication 4,
**caractérisé en ce que**
l'élément de fixation (3, 21, 22, 41, 67, 82, 116, 130, 140, 150, 160, 170, 180, 201, 299) présente une seconde rainure étroite (132, 144, 164, 174) dans le plan de la première rainure (48, 69, 83, 123, 131, 141, 151, 161, 171, 181) ou à angle droit par rapport à ce plan ou **en ce que** l'élément de fixation (3, 21, 22, 41, 67, 82, 116, 130, 140, 150, 160, 170, 180, 201, 299) présente plusieurs trous taraudés (56, 133, 134, 142, 152, 154, 162, 165, 172, 175, 183, 185, 216) pour recevoir un élément d'arrêt verticalement au plan de la première rainure (48, 69, 83, 123, 131, 141, 151, 161, 171, 181) ou dans un pian déplacé parallèlement à la première rainure (48, 69, 83, 123, 131, 141, 151, 161, 171, 181).

6. Support selon la revendication 5,
**caractérisé en ce que**
la seconde rainure (132, 144, 164, 174) est prévue pour recevoir une paroi latérale ou un fond (53, 78, 245, 256) du boîtier de réception (4, 29, 42, 66, 93, 110) ou pour recevoir un rail de fixation (211, 299) du cadre de montage ou une tôle de fond (14, 30, 75, 92, 111, 113, 210).

7. Support selon une des revendications 1 à 6,
**caractérisé en ce que**
les éléments de fixation (3, 21, 22, 41, 67, 82, 116, 130, 140, 150, 160, 170, 180, 201, 299) et le boîtier de réception (4, 29, 42, 66, 93, 110) ou le cadre de montage sont masqués par un bandeau (72, 87, 117, 209, 288), qui est réalisé approximativement sur toute la largeur du radiateur à panneaux (2, 23, 43, 61, 81, 240, 250, 260), et/ou **en ce que** les éléments de fixation (3, 21, 22, 41, 67, 82, 116, 130, 140, 150, 160, 170, 180, 201, 299) sont prévus pour supporter un capteur de température (268).

8. Support selon une des revendications 6 à 7,
**caractérisé en ce que**
la tôle de fond (14, 30, 75, 92, 111, 113, 210) présente un chanfrein avant (121) sur lequel un bandeau (72, 87, 117, 209, 288) peut être posé, ou **en ce que** la tôle de fond (14, 30, 54, 75, 92, 111, 113) présente un prolongement avant qui s'étend en ligne droite ou courbée et qui est insére dans la seconde rainure (132, 144, 164, 174) de l'élément de fixation (3, 21, 22, 41, 67, 82, 116, 130, 140, 150, 160, 170, 180, 201, 299).

9. Support selon une des revendications 6 à 8,
**caractérisé en ce que**
la tôle de fond (14, 30, 75, 92, 111, 113, 210) est orientée de manière inclinée à un angle de 10 à 30 degrés par rapport à l'horizontale, et/ou **en ce que** la tôle de fond (14, 30, 75, 92, 111, 113, 210) présente des orifices de passage d'air.

10. Support selon une des revendications 1 à 9,
**caractérisé en ce que**
le cadre de montage est composé d'un premier et d'un second rails de fixation espacés (211, 212, 294), d'un profil de liaison et de tôles latérales (202, 202', 203) en façade.

11. Support selon la revendication 10,
**caractérisé en ce que**
le cadre de montage de construction plate est prévu pour recevoir au moins un ventilateur (125, 204, 284) qui peut être monté entre les panneaux du radiateur à panneaux (240, 250, 260) de préférence sur les deux rails de fixation (211, 212, 294).

12. Support selon une des revendications 9 à 11,
**caractérisé en ce que**,
sur le ou les élément(s) de fixation (3, 21, 22, 41, 67, 82, 116, 130, 140, 150, 160, 170, 180, 201, 299) peut être vissé le premier rail de fixation (211, 294) qui est relié par deux tôles latérales extérieures (202, 202', 203) et un profil de liaison au second rail de fixation (212, 294), les deux rails de fixation (211, 212, 294) étant orientés parallèlement.

13. Support selon une des revendications 9 à 12,
**caractérisé en ce que**
le second rail de fixation (212, 294) est relié à une tôle de retenue (13, 226) recourbée à 120 degrés et qui est prévue pour recevoir la tôle de fond (14, 30, 75, 92, 111, 113, 210).

14. Support selon la revendication 13,
**caractérisé en ce que**,
dans la tôle de retenue (13, 226), une seconde tôle de fond (14, 30, 75, 92, 111, 113, 210) peut être insérée et est retenue summplémentairement à l'aide d'au moins un élément de fixation (3, 21, 22, 41, 67, 82, 116, 130, 140, 150, 160, 170, 180, 201, 299), la tôle de fond (14, 30, 75, 92, 111, 113, 210) étant réalisée avec des orifices de passage d'air pour recevoir un matériau filtrant ou étant réalisée sous la forme d'un bac de réserve d'eau.

15. Support selon une des revendications 7 à 14,
**caractérisé en ce que**
le bandeau (72, 87, 117, 209, 288) est composé d'un feuillard avant courbé en forme de U et d'une tôle de fond (14, 30, 75, 92, 111, 113, 210) fixée au feuillard.

16. Support selon une des revendications 1 à 15,
**caractérisé en ce que**
l'unité de circulation d'air (1, 20, 40, 60, 80) comprend des ventilateurs (125, 204, 284), un panneau diffuseur d'air (281) étant disposé au-dessus des ventilateurs montés (125, 204, 284) et présente, dans l'espace prévu pour la grille des ventilateurs (125, 204, 284), respectivement deux feuillards coudés vers le haut (291, 293) qui sont disposés pour partie sur le ventilateur (125, 204, 284) et pour partie sur l'espace intermédiaire.

17. Support selon une des revendications 1 à 16,
**caractérisé en ce**
**qu'**au moins une tôle latérale (202, 202', 203, 282, 283) est prévue pour recevoir des éléments de commutation (207, 304) et/ou des régulateurs (208).
